(19) Europäisches Patentamt
European Patent Office
Office européen des brevets

(11) EP 4 700 208 A1

(12) **EUROPEAN PATENT APPLICATION**

(43) Date of publication:
**25.02.2026 Bulletin 2026/09**

(21) Application number: **24195478.3**

(22) Date of filing: **20.08.2024**

(51) International Patent Classification (IPC):
***E21B 43/16*** *(2006.01)* ***E21B 41/00*** *(2006.01)*
***E21B 49/00*** *(2006.01)*

(52) Cooperative Patent Classification (CPC):
**E21B 49/00; E21B 41/0064; E21B 43/164**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **The University Court Of The University of Edinburgh Edinburgh EH8 9YL (GB)**
- **CARBFIX 110 Reykjavik (IS)**

(72) Inventors:
- **GILFILLAN, Stuart Edinburgh EH8 9YL (GB)**
- **HOLDSWORTH, Chris Edinburgh EH8 9YL (GB)**
- **SNÆBJÖRNSDÓTTIR, Sandra 110 Reykjavik (IS)**
- **JOHNSON, Gareth Glasgow (GB)**
- **SIGFÚSSON, Bergur 110 Reykjavik (IS)**
- **VOIGT, Martin 110 Reykjavik (IS)**

(74) Representative: **Budde Schou A/S Dronningens Tvaergade 30 1302 Copenhagen K (DK)**

(54) **METHOD OF MONITORING AND/OR VERIFYING CARBON DIOXIDE MINERALISATION**

(57) The present invention relates to a method for monitoring carbon dioxide mineralisation in a geological reservoir. The method comprises providing a system comprising an injection well for injecting fluid into the geological reservoir, and an extraction well arranged a predetermined distance from the injection well, for extracting fluid samples from the geological reservoir. The method further comprises injecting the injectate into the geological reservoir through the injection well and extracting a mixed fluid sample from the extraction well after the period of time has passed. The mixed fluid sample comprising a mixture of background reservoir fluid and injectate. Measurements are performed on the injectate and on the mixed fluid sample in order to estimate a 13C/12C ratio of CO2 and/or to estimate a CO2 to noble gas ratio of the injectate and of the mixed fluid at the extraction well. By accounting for background signals and comparing the estimated 13C/12C ratio of CO2 and/or CO2 to noble gas ratio in the mixed fluid with an expected 13C/12C ratio of CO2 and/or CO2 to noble gas ratio in the mixed fluid, it can be determined whether or not mineralisation has occurred between the injection well and the extraction well.

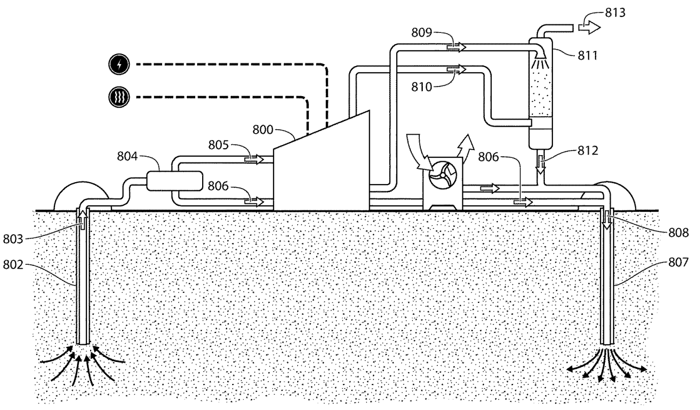


Figure 8



EP 4 700 208 A1

## Description

### Field of the Invention

The present invention relates to a method for monitoring and/or verifying carbon dioxide mineralisation in a storage reservoir, e.g. in a subterranean formation.

### Background

According to the Intergovernmental Panel on Climate Change (IPCC) and the UK Climate Change Committee (CCC), gigaton-scale capture, removal and storage of carbon dioxide ($CO_2$) is now unavoidable if the world is to reach net zero greenhouse gas (GHG) emissions and limit global warming to below 1.5-2°C.

Emerging carbon capture and storage (CCS) and carbon dioxide removal (CDR) markets require robust and deployable methods for monitoring, reporting and verifying (MRV) $CO_2$ storage for respective projects.

Durable and verifiable storage is essential to ensure $CO_2$ is permanently isolated from the atmosphere and accurately accounted for. Subsurface geological reservoirs are known to offer secure storage of $CO_2$ for millennia and can be closely monitored using established methods of subsurface investigation.

The majority of active and planned $CO_2$ storage projects use sedimentary reservoir lithologies, where vertical migration of buoyant $CO_2$ is prevented by physical trapping mechanism such as impermeable cap rocks and capillary forces in residual pore space.

In recent years mafic and ultramafic rock formations have become increasingly of interest for $CO_2$ storage because of their capacity to rapidly immobilise $CO_2$ in carbonate minerals through a process called carbon mineralisation. In this scenario, $CO_2$ dissolves in water, eliminating its inherent buoyancy, before reacting with divalent cations (e.g. $Ca^{2+}/Mg^{2+}/Fe^{2+}$) present in reservoir rocks that bind with aqueous $CO_2$ to form carbonate minerals (e.g. calcium carbonate, magnesium carbonate, or ferrous carbonate). The key advantage of carbon mineralisation is that sequestered $CO_2$ is immobilised and cannot escape back to the atmosphere, thus reducing global warming. In-situ $CO_2$ mineralisation in basaltic rocks could offer secure storage for 10 to 100 times more $CO_2$ than will be emitted by combustion of all fossil fuels remaining on Earth. However, it is difficult to track the long-term fate of $CO_2$ injected into subsurface basaltic rocks because injected $CO_2$ can also remain dissolved in fluids.

Monitoring and verification of in-situ $CO_2$ mineralisation typically uses shifts in geochemical indicators to track and quantify storage. Conventional techniques use reactive and non-reactive indirect (e.g., pH, dissolved carbon and cation concentrations) and/or added (e.g., $^{14}C$, $SF_6$, or 1-naphthalenesulfonic acid sodium salt (1-ns)) tracers for storage verification. However, these techniques rely on assumptions about the fate of $CO_2$, or, in the case of added tracers, can only be used sparsely because of the cost of use and environmental restrictions.

It is an object of the invention to address and/or mitigate one or more problems associated with the prior art.

It is an object of the invention to provide a reliable and affordable method of monitoring, e.g. quantifying, carbon dioxide mineralisation in a storage reservoir, e.g. in a subterranean formation.

### Summary

The present invention is based on the finding that quantification of carbon dioxide capture through dissolution into water and/or storage through mineralisation as carbonate minerals may be achieved through the use of differing fractionation of certain inherent substances in carbon dioxide, such as carbon isotopes and/or noble gases, when mineralisation and/or dissolution of carbon dioxide occurs *in situ* or on the surface. Thus, the present invention is based on monitoring the fractionation in those substances between a feed of carbon dioxide injected into a storage reservoir and a produced stream of fluid downstream of the storage reservoir.

According to a first aspect, there is provided a method of monitoring carbon dioxide mineralisation and/or dissolution in a storage reservoir, the method comprising:

injecting a feed of carbon dioxide into the storage reservoir, wherein the feed has a first $^{13}C/^{12}C$ ratio;
producing a fluid downstream of the storage reservoir; and
measuring the $^{13}C/^{12}C$ ratio of the produced fluid.

The produced fluid may have a second $^{13}C/^{12}C$ ratio.

When carbon dioxide in the feed is mineralised and/or dissolved in the storage reservoir, the second $^{13}C/^{12}C$ ratio may be different from the first $^{13}C/^{12}C$ ratio.

The difference in the second $^{13}C/^{12}C$ ratio and the first $^{13}C/^{12}C$ ratio may be representative of mineralisation and/or dissolution of the carbon dioxide injected into the storage reservoir, e.g. between at least one injection well and at

least one production well.

The method may comprise quantifying the amount of carbon dioxide mineralisation and/or dissolution in the reservoir based on a comparison, e.g. a difference, difference between the first $^{13}C/^{12}C$ ratio and the second $^{13}C/^{12}C$ ratio.

Advantageously, the inventors have discovered that the change or shift in the ratios of natural, inherent isotopes, and in particular $^{13}C/^{12}C$, between an injected feed and a produced fluid, may be used to determine the percentage of $CO_2$ mineralised and/or dissolved in a storage reservoir. Without wishing to be bound by theory, it is believed that when $CO_2$ is mineralised and/or dissolved, $^{13}C$ and $^{12}C$ fractionate and the $^{13}C/^{12}C$ ratio shifts by a magnitude proportional to the fraction of $CO_2$ mineralised and/or dissolved in the storage reservoir, which is also dependent on the *in-situ* temperature and pH. In particular, when $CO_2$ is mineralised and/or dissolved, $^{12}C$ can be preferentially sequestered into the mineralised $CO_2$ (e.g. as the carbonate mineral calcite ($CaCO_3$)) in preference to $^{13}C$, or vice-versa, depending on the *in-situ* temperature and pH. Therefore, measuring a shift in $^{13}C/^{12}C$ ratios between a feed of $CO_2$ and a produced fluid downstream of the storage reservoir may provide a reliable indicator of the level of $CO_2$ mineralised and/or dissolved in the storage reservoir.

In addition, the direction and magnitude of ratio shifts may permit differentiation between $CO_2$ mineralisation and dissolution.

Advantageously, $^{13}C$ and $^{12}C$ are the natural inherent isotopes of carbon, which means that the present method does not require the addition of external and/or artificial substances such as $^{14}C$, $SF_6$, or 1-ns tracers, to the feed.

The method may comprise determining and/or measuring the $^{13}C/^{12}C$ ratio in the feed.

The method may comprise determining the difference or shift in the $^{13}C/^{12}C$ ratio between the feed and the produced fluid.

The method may comprise determining, based on the difference or shift in the $^{13}C/^{12}C$ ratio between the feed and the produced fluid, a level of $CO_2$ mineralisation and/or dissolution in the storage reservoir.

The method may comprise using calibration data.

The method may comprise performing calibration of the storage reservoir.

It will be understood that a/the storage reservoir includes substances and/or fluids, some of which will be displaced by the injection of the feed and produced in the produced fluid. Thus, the produced fluid may typically comprise a mixture of background fluids and injected feed. Therefore, without wishing to be bound by theory, this means that any fractionation resulting from capture (e.g. mineralisation and/or dissolution of injected $CO_2$) may be affected by the geochemical signature of background $CO_2$ in the storage reservoir. Calibration may allow a user to account for the geochemical signature of background fluids in the reservoir in the measurement made on the produced fluid.

Calibration may comprise injecting a calibration feed into the storage reservoir, e.g. via (the) at least one injection well, and producing a calibration fluid downstream of the storage reservoir, e.g. via (the) at least one producing well, e.g. (the) at least one one production well and/or monitoring well.

The calibration feed may comprise at least one tracer. The calibration feed may comprise a natural and/or inherent tracer, e.g. $^{13}C$, $^{18}O$, or a noble gas. The calibration feed may comprise an added or artificial tracer, e.g. $^{14}C$, $SF_6$, or 1-ns.

Calibration may comprise determining and/or measuring at least one tracer concentration in the calibration feed, and determining and/or measuring the $^{13}C/^{12}C$ ratio in the produced calibration fluid.

The calibration data may comprise data indicating a difference or shift in the $^{13}C/^{12}C$ ratio between a calibration feed and a produced fluid downstream of the storage reservoir.

Typically, the calibration feed may comprise or may be a fluid, e.g. an aqueous fluid, free or substantially free of carbon dioxide.

The calibration feed may comprise or may be an aqueous fluid such as water, e.g. freshwater, saltwater, subterranean water, brine, or the like.

The method may comprise applying the calibration data, to the difference or shift in the $^{13}C/^{12}C$ ratio between the feed and the produced fluid.

The method may further comprise determining the percentage of $CO_2$ mineralised and/or dissolved in a storage reservoir.

The method may comprise or may further comprise monitoring and/or measuring a shift in the ratio of $CO_2$ to a noble gas, between the feed and the produced fluid.

Preferably, the noble gas may not be radon.

The noble gas isotope may be an isotope of a noble gas selected from helium (He), neon (Ne), argon (Ar), krypton (Kr) or xenon (Xe).

Typically, the noble gas may be helium. The noble gas isotope may be an isotope of helium, typically $^3He$.

Advantageously, the inventors have discovered that the change or shift in the ratios of $CO_2$ and natural, inherent noble gas or isotope thereof (e.g. $^3He$), between an injected feed and a produced fluid, may be used to determine the percentage of $CO_2$ mineralised and/or dissolved in a storage reservoir. Without wishing to be bound by theory, it is believed that when $CO_2$ is mineralised and dissolved, $CO_2$/noble gas ratios decrease by a magnitude proportional to the fraction of

$CO_2$ mineralised and/or dissolved in the storage reservoir. Therefore, measuring a shift in $CO_2$/noble gas ratios between a feed of carbon dioxide and a produced fluid downstream of the storage reservoir may provide a reliable indicator of the level of $CO_2$ mineralised and/or dissolved in the storage reservoir.

Advantageously, the monitoring of the $CO_2/^3He$ ratio allows a comparison of $CO_2$ behaviour relative to a substance which is unreactive in the storage reservoir is therefore unaffected by mineralisation.

The feed may have a first ratio of $CO_2$/noble gas.

The method may comprise determining and/or measuring the (first) ratio of $CO_2$/noble gas in the feed.

The method may comprise determining and/or measuring the ratio of $CO_2$/noble gas in the produced fluid.

The produced fluid may have a second ratio of $CO_2$/noble gas.

The method may comprise determining the difference or shift in the $CO_2$/noble gas ratio between the feed and the produced fluid. The method may comprise determining, based on the difference or shift in the $CO_2$/noble gas ratio between the feed and the produced fluid, a level of $CO_2$ mineralisation and/or dissolution in the storage reservoir.

The method may comprise quantifying the amount of carbon dioxide mineralisation and/or dissolution in the reservoir based on a comparison, e.g. a difference, difference between the first $CO_2$/noble gas ratio and the second $CO_2$/noble gas ratio.

The method may comprise using calibration data.

The method may comprise performing calibration of the storage reservoir.

It will be understood that a/the storage reservoir includes substances and/or fluids (independent from the injected fluids), some of which will be displaced by the injection of the feed and produced in the produced fluid. Thus, the produced fluid may typically comprise a mixture of background fluids and injected feed. Therefore, without wishing to be bound by theory, this means that any fractionation resulting from capture and/or storage (e.g. mineralisation and/or dissolution of injected $CO_2$) may be affected by the geochemical signature of background $CO_2$ in the storage reservoir. Calibration may allow a user to account for the geochemical signature of background fluids in the reservoir in the measurement made on the produced fluid.

Calibration may comprise injecting a calibration feed into the storage reservoir, e.g. via (the) at least one injection well, and producing a calibration fluid downstream of the storage reservoir, e.g. via (the) at least one producing well, e.g. (the) at least one production well and/or monitoring well.

The calibration feed may comprise at least one tracer. The calibration feed may comprise a natural and/or inherent tracer, e.g. $^{13}C$, $^{18}O$, or a noble gas. The calibration feed may comprise an added or artificial tracer, e.g. $^{14}C$, $SF_6$, or 1-ns.

Calibration may comprise determining and/or measuring the ratio of $CO_2$/noble gas in the calibration feed, and determining and/or measuring the ratio of $CO_2$/noble gas in the produced calibration fluid.

The calibration data may comprise data indicating a difference or shift in the ratio of $CO_2$/noble gas between a calibration feed and a produced fluid downstream of the storage reservoir.

Typically, the calibration feed may comprise or may be a fluid, e.g. an aqueous fluid, free of substantially free of carbon dioxide.

The calibration feed may comprise or may be an aqueous fluid such as water, e.g. freshwater, saltwater, subterranean water, brine, or the like.

The method may comprise comparing the difference or shift in the ratio of $CO_2$/noble gas between the feed and the produced fluid, to the calibration data. The method may further comprise determining the percentage of $CO_2$ mineralised and/or dissolved in a storage reservoir.

Thus, in an embodiment of the first aspect, there is provided a method of monitoring carbon dioxide mineralisation and/or dissolution in a storage reservoir, the method comprising:

injecting a feed of carbon dioxide into the storage reservoir;
producing a fluid downstream of the storage reservoir;
monitoring and/or measuring a shift in the $^{13}C/^{12}C$ ratio, between the feed and the produced fluid; and
monitoring and/or measuring a shift in the ratio of $CO_2$ to a noble gas, between the feed and the produced fluid.

The method may comprise or may further comprise monitoring and/or measuring a shift in the ratio of $^{18}O/^{16}O$, between the feed and the produced fluid.

Advantageously, the method may comprise determining whether the produced fluid includes fluid, e.g. water, injected in the feed, or whether the produced fluid includes background fluid only (e.g. fluid displaced from the storage reservoir).

Without wishing to be bound by theory, it is believed that, because $CO_2$ constitutes a minor fraction of the overall oxygen isotope pool in the storage reservoir, any shift in the ratio of $^{18}O/^{16}O$, between the feed and the produced fluid, can be considered to be almost entirely unrelated to the behaviour, e.g. mineralisation, of $CO_2$. In particular, detecting a shift in the ratio of $^{18}O/^{16}O$ may indicate that the produced fluid contains at least a portion of the injected feed, which may help

distinguish between injected feed and background signals in the produced fluid. In other words, a shift in the ratio of $^{18}O/^{16}O$ ($\delta^{18}O_{H2O}$) may be used as a tracer of the injected feed, particularly when the feed is an aqueous fluid. The ratio of $^{18}O/^{16}O$ is not affected by mineralisation of $CO_2$, because $\delta^{18}O_{H2O}$ is only controlled by water. Thus, for example, detection of a shift in the ratio of $^{18}O/^{16}O$ may indicate that the injected fluids are being produced, whilst a shift in the $^{13}C/^{12}C$ ratio ($\delta^{13}C_{CO2}$) that is characteristic of mineralisation would provide two separate indicators confirming the occurrence of mineralised of $CO_2$. In other words, using the ratio of $^{18}O/^{16}O$ as a way of monitoring the (non-reactive) carrier of the carbon dioxide injected in the feed, enables a user to ensure any shift in the $^{13}C/^{12}C$ ratio relates to mineralisation of carbon dioxide and not, for example, to background interference or other similar phenomena.

The feed may have a first $^{18}O/^{16}O$ ratio.

The method may comprise measuring the $^{18}O/^{16}O$ ratio in the produced fluid.

The produced fluid may have a second $^{18}O/^{16}O$ ratio.

The method may comprise determining the difference or shift in the $^{18}O/^{16}O$ ratio between the feed and the produced fluid.

The method may comprise determining, based on the difference or shift in the $^{18}O/^{16}O$ ratio between the feed and the produced fluid, the status or level of the injected feed being produced in the produced fluid.

The method may comprise quantifying the amount of carbon dioxide mineralisation and/or dissolution in the reservoir based on a comparison, e.g. a difference, between the first $^{18}O/^{16}O$ ratio and the second $^{18}O/^{16}O$ ratio.

The method may comprise using calibration data. The calibration data may comprise data indicating a difference or shift in the $^{18}O/^{16}O$ ratio between a calibration feed and a produced fluid downstream of the storage reservoir. Typically, the calibration feed may comprise or may be a fluid, e.g. an aqueous fluid, free of substantially free of carbon dioxide.

The calibration feed may comprise or may be an aqueous fluid such as water, e.g. freshwater, saltwater, subterranean water, brine, or the like.

Thus, in an embodiment of the first aspect, there is provided a method of monitoring carbon dioxide mineralisation and/or dissolution in a storage reservoir, the method comprising:

injecting a feed of carbon dioxide into the storage reservoir;
producing a fluid downstream of the storage reservoir;
monitoring and/or measuring a shift in the $^{13}C/^{12}C$ ratio, between the feed and the produced fluid; and
monitoring and/or measuring a shift in the $^{18}O/^{16}O$ ratio, between the feed and the produced fluid.

The following features may be applicable to any of the above or subsequent aspects.

The storage reservoir may comprise or may be a subterranean formation.

The storage reservoir may comprise or may be a basaltic rock formation and/or a mafic or ultramafic rock formation. Advantageously, these rock types have high concentrations of metals, e.g. divalent cations, capable of reacting with dissolved carbon dioxide (carbonate) to yield mineralisation *in situ,* and have low silica levels.

The method may comprise injecting the feed continuously.

The method may comprise injecting the feed intermittently.

The method may comprise producing the fluid downstream of the storage reservoir continuously.

The method may comprise producing the fluid downstream of the storage reservoir intermittently, e.g. at predetermined, regular, or irregular time intervals.

The method may comprise injecting the feed via at least one injection well.

The method may comprise producing the fluid via at least one production well or monitoring well.

Typically, the storage reservoir may be located between the at least one injection well and the at least one production well or monitoring well.

The feed of carbon dioxide may comprise or may be an injection fluid.

The method may comprise determining and/or measuring the $^{13}C/^{12}C$ ratio in the injection fluid.

The method may comprise preparing the injection fluid.

The method may comprise dissolving carbon dioxide into a fluid, e.g. an aqueous solution, to prepare the injection fluid. Preferably, the injection fluid may be an aqueous solution. In such instance, dissolution may occur on the surface. For example, dissolution may be performed as disclosed in EP4031267A1 (SIGFUSSON et al), which is incorporated herein by reference in its entirety.

The method may comprise feeding carbon dioxide into an absorption tower, as disclosed for example in EP4031267A1 (SIGFUSSON et al), which is incorporated herein by reference in its entirety.

The method may comprise feeding an aqueous fluid into the dissolution tower.

The method may comprise dissolving at least a portion of the carbon dioxide into the aqueous fluid.

The aqueous fluid may comprise or may be an aqueous liquid such as water, e.g. freshwater, saltwater, subterranean water, brine, or the like.

Advantageously, the method may comprise feeding the carbon dioxide and the aqueous fluid in a counter-flow

arrangement.

The method may comprise feeding the carbon dioxide from a lower end or lower portion of the dissolution tower.

The method may comprise feeding the aqueous fluid from an upper end or upper portion of the dissolution tower.

The method may comprise recovering the injection fluid from the dissolution tower, e.g. from a lower end or lower portion thereof.

The method may comprise recovering a gas outlet from the dissolution tower, e.g. from an upper end or upper portion thereof. The gas outlet may comprise a portion of the carbon dioxide which has not been dissolved in the aqueous fluid.

Advantageously, providing the feed of carbon dioxide as an injection fluid, e.g. an aqueous injection liquid, may allow the shift in $^{13}C/^{12}C$ ratio to be related to mineralisation, rather than dissolution, since the carbon dioxide injected in the feed is then already in dissolved form. Thus, providing the feed of carbon dioxide as an injection fluid, e.g. an aqueous injection liquid, may avoid the need to differentiate carbon dioxide loss between mineralisation and dissolution.

According to a second aspect, there is provided a method of monitoring carbon dioxide mineralisation and/or dissolution in a storage reservoir, the method comprising:

injecting a feed of carbon dioxide into the storage reservoir, wherein the feed has a first ratio of $CO_2$ to a noble gas;
producing a fluid downstream of the storage reservoir; and
measuring the ratio of $CO_2$ to noble gas of the produced fluid.

Advantageously, the inventors have discovered that the change or shift in the ratios of $CO_2$ and natural, inherent noble gas or isotope thereof (e.g. $^3He$), between an injected feed and a produced fluid, may be used to determine the percentage of $CO_2$ mineralised and/or dissolved in a storage reservoir. Without wishing to be bound by theory, it is believed that when $CO_2$ is mineralised and dissolved, $CO_2$/noble gas ratios decrease by a magnitude proportional to the fraction of $CO_2$ mineralised and/or dissolved in the storage reservoir. Therefore, measuring a shift in $CO_2$/noble gas ratios between a feed of carbon dioxide and a produced fluid downstream of the storage reservoir may provide a reliable indicator of the level of $CO_2$ mineralised and/or dissolved in the storage reservoir.

Advantageously, the monitoring of the $CO_2/^3He$ ratio may allow a comparison of $CO_2$ behaviour relative to a substance which is unreactive in the storage reservoir is therefore unaffected by mineralisation.

The method may comprise quantifying the amount of carbon dioxide mineralisation and/or dissolution in the reservoir based on a comparison, e.g. a difference, difference between the first $CO_2$/noble gas ratio and the second $CO_2$/noble gas ratio.

The corresponding features described in relation to the first aspect may equally apply to the second aspect and, merely for brevity, are not repeated here.

According to a third aspect, there is provided a method of monitoring carbon dioxide mineralisation and/or dissolution in a storage reservoir, the method comprising:

injecting a feed of carbon dioxide into the storage reservoir, wherein the feed has a first ratio of $^{13}C/^{12}C$ and a first ratio of $CO_2$ to a noble gas;
producing a fluid downstream of the storage reservoir; and
measuring the ratio of $^{13}C/^{12}C$ and the ratio of $CO_2$ to noble gas of the produced fluid.
The method may comprise:

monitoring and/or measuring a shift in the $^{13}C/^{12}C$ ratio, between the feed and the produced fluid; and
monitoring and/or measuring a shift in the ratio of $CO_2$ to a noble gas, between the feed and the produced fluid.

Advantageously, combining monitoring of the $^{13}C/^{12}C$ ratio and the ratio of $CO_2$ to noble gas between the feed and the produced fluid, may provide more accurate and/or more reliable information, than using a single marker. For example, using the $^{13}C/^{12}C$ ratio only may be sufficient, but in certain circumstances the changes in the $^{13}C/^{12}C$ ratio due to mineralisation may overlap with other *in situ* phenomena such as background values or other chemical or physical reactions, which may cause the mineralisation signal to be "hidden" by these other phenomena. Thus, using an additional marker such as the ration of $CO_2/^3He$ allows the monitoring of $CO_2$ behaviour relative to a substance that in unreactive and unaffected by mineralisation. As a result, if the $^{13}C/^{12}C$ ratio and the ratio of $CO_2/^3He$ shift by levels that correspond to the same magnitude of mineralisation, then it can be reliably concluded that mineralisation is the cause. On the other hand, using the ratio of $CO_2/^3He$ can be a reliable indicator of $CO_2$ capture (either by mineralisation or dissolution) but may not allow to differentiate between the specific mechanisms of $CO_2$ capture (e.g. between mineralisation and dissolution). Thus, combining monitoring the $^{13}C/^{12}C$ ratio and the ratio of $CO_2$ to noble gas between the feed and the produced fluid, may provide both an accurate method of monitoring $CO_2$ capture, and may also allow to differentiate reliably between $CO_2$ mineralisation and dissolution.

The method may comprise quantifying the amount of carbon dioxide mineralisation and/or dissolution in the reservoir based on a comparison, e.g. a difference, difference between the first $^{13}C/^{12}C$ ratio and the second $^{13}C/^{12}C$ ratio, and on a comparison, e.g. a difference, difference between the first $CO_2$/noble gas ratio and the second $CO_2$/noble gas ratio.

The corresponding features described in relation to the first aspect may equally apply to the third aspect and, merely for brevity, are not repeated here.

According to a fourth aspect, there is provided a method of monitoring carbon dioxide mineralisation and/or dissolution in a storage reservoir, the method comprising:

injecting a feed of carbon dioxide into the storage reservoir, wherein the feed has a first ratio of $^{13}C/^{12}C$ and a first ratio of $^{18}O/^{16}O$;
producing a fluid downstream of the storage reservoir; and
measuring the ratio of $^{13}C/^{12}C$ and the $^{18}O/^{16}O$ ratio of the produced fluid.

The method may comprise:

monitoring and/or measuring a shift in the $^{13}C/^{12}C$ ratio, between the feed and the produced fluid; and
monitoring and/or measuring a shift in the $^{18}O/^{16}O$ ratio, between the feed and the produced fluid.

The method may comprise quantifying the amount of carbon dioxide mineralisation and/or dissolution in the reservoir based on a comparison, e.g. a difference, between the first $^{13}C/^{12}C$ ratio and the second $^{13}C/^{12}C$ ratio, and on a comparison, e.g. a difference, difference between the first $^{18}O/^{16}O$ ratio and the second $^{18}O/^{16}O$ ratio.

The corresponding features described in relation to the first aspect may equally apply to the fourth aspect and, merely for brevity, are not repeated here.

The features described in relation to any aspect of the invention may equally apply to any other aspect and, merely for brevity, are not repeated.

In preferred embodiments, the present invention relates to a method for monitoring mineralisation of carbon dioxide ($CO_2$) injected into a geological reservoir, the method comprising:

providing a system comprising:

an injection well for injecting fluid into the geological reservoir, and
an extraction well arranged a predetermined distance from the injection well, for extracting fluid samples from the geological reservoir,

performing a tracer test, in order to:

establish that a flow path exists between the injection well and the extraction well, and
characterize the flow path by:

determining/estimating a period of time it takes a fluid, injected through the injection well into the geological reservoir, to reach the extraction well,
determining/estimating a mixing ratio of background reservoir fluid and injected fluid at the extraction well,

obtaining background reservoir fluid data including an estimated $^{13}C/^{12}C$ ratio of $CO_2$ in the background reservoir fluid at the extraction well and/or an estimated $CO_2$ to noble gas ratio in the background reservoir fluid at the extraction well,
providing an injectate comprising water, $CO_2$ and noble gas,
performing first measurements on the injectate or on a plurality of fluids which has been merged to form the injectate, in order to estimate a $^{13}C/^{12}C$ ratio of $CO_2$ in the injectate and/or to estimate a $CO_2$ to noble gas ratio in the injectate,
injecting the injectate into the geological reservoir through the injection well,
extracting a mixed fluid sample from the extraction well after the period of time has passed, the mixed fluid sample comprising a mixture of background reservoir fluid and injectate,
performing second measurements on the mixed fluid sample, in order to estimate a $^{13}C/^{12}C$ ratio of $CO_2$ of the mixed fluid at the extraction well and/or to estimate a $CO_2$ to noble gas ratio of the mixed fluid at the extraction well,
calculating the expected $^{13}C/^{12}C$ ratio of $CO_2$ and/or the expected $CO_2$ to noble gas ratio of the mixed fluid at the extraction well if no mineralisation of $CO_2$ has occurred between the injection well and the extraction well, based on the estimated mixing ratio at the extraction well, the background reservoir fluid data and the estimated $^{13}C/^{12}C$ ratio of $CO_2$ in the injectate and/or the estimated $CO_2$ to noble gas ratio in the injectate,

comparing the expected $^{13}C/^{12}C$ ratio of $CO_2$ and/or the expected $CO_2$ to noble gas ratio of the mixed fluid at the extraction well with the estimated $^{13}C/^{12}C$ ratio of $CO_2$ and/or the estimated $CO_2$ to noble gas ratio of the mixed fluid at the extraction well, respectively, in order to determine if mineralisation has occurred between the injection well and the extraction well and thereby monitor the mineralisation of carbon dioxide injected into the geological reservoir.

As described above, a preferred embodiment of a method according to the present invention includes providing a system comprising an injection well for injecting fluid into the geological reservoir, and an extraction well arranged a predetermined distance from the injection well, for extracting fluid samples from the geological reservoir. If the injection well and extraction well are connected via a flow path, at least some of the injectate will flow from the injection well to the extraction well. By comparing the $^{13}C/^{12}C$ ratio of $CO_2$ and/or the $CO_2$ to noble gas ratio in the injectate and at the extraction well, it can be determined whether mineralisation of $CO_2$ has occurred between the injection well and the extraction well.

Because the extraction well is located a predetermined distance from the injection well within the geological reservoir, it will take some time before the injectate reaches the extraction well after injection into the geological reservoir through the injection well. Thus, fluid samples should not be collected from the extraction well before the injectate has travelled through the flow path from the injection well to the extraction well.

Thus, the method of the present invention comprises establishing that a flow path exists between the injection well and the extraction well and determining/estimating a period of time it takes a fluid, injected through the injection well into the geological reservoir, to reach the extraction well. It is possible to determine whether a flow path exists between the injection well and the extraction well by performing a tracer test. Furthermore, it is also possible to determine the period of time it takes a fluid, injected through the injection well into the geological reservoir, to reach the extraction well, by performing the tracer test.

A tracer test may comprise injecting a fluid comprising a known concentration of tracer into the geological reservoir through the injection well and extracting a plurality of fluid samples from the extraction well at different times and measuring the concentration of tracer in the extracted fluid samples, until the tracer is observed in the extracted fluid samples. The amount of $CO_2$ which has disappeared between the injection well and extraction well may indicate that $CO_2$ mineralisation between the injection well and the extraction well has occurred. However, because the injectate mixes with background reservoir fluid of the geological reservoir when it enters the geological reservoir, fluid extracted from the extraction well is a mixed fluid.

The mixing ratio of background reservoir fluid and injectate at the extraction well can also be determined using the tracer test, if the concentration of the tracer added to the injectate is known. By determining the concentration of the tracer at the extraction well, the dilution rate of the tracer at the extraction well can be determined, and thus the mixing ratio of background reservoir fluid and injectate at the extraction well can be determined.

Because the injectate mixes with background reservoir fluid, the $^{13}C/^{12}C$ ratio of $CO_2$ in the background reservoir fluid at the extraction well and/or the $CO_2$ to noble gas ratio in the background reservoir fluid at the extraction well, has to be determined, in order to make sure that a shift in $^{13}C/^{12}C$ ratio of $CO_2$ and/or $CO_2$ to noble gas ratio between the injectate and mixed fluid at the extraction well, is caused by mineralisation, not background interference.

Based on the estimated mixing ratio at the extraction well, background reservoir fluid data and the estimated $^{13}C/^{12}C$ ratio of $CO_2$ in the injectate and/or the estimated $CO_2$ to noble gas ratio in the injectate, an expected $^{13}C/^{12}C$ ratio of $CO_2$ and/or an expected $CO_2$ to noble gas ratio of the mixed fluid at the extraction well can be calculated, if no mineralisation of $CO_2$ has occurred between the injection well and the extraction well.

By comparing the expected $CO_2$ to noble gas ratio in the mixed fluid at the extraction well, if no mineralisation has occurred, with the estimated $CO_2$ to noble gas ratio in the mixed fluid at the extraction well, it can be determined whether or not mineralisation has occurred.

If the estimated $CO_2$ to noble gas ratio in the mixed fluid at the extraction well is the same as the expected $CO_2$ to noble gas ratio in the mixed fluid at the extraction well, it indicates that $CO_2$ has not participated in any reactions and that no mineralisation has occurred.

If the estimated $CO_2$ to noble gas ratio in the mixed fluid at the extraction well is different from the expected $CO_2$ to noble gas ratio in the mixed fluid at the extraction well, it indicates that the $CO_2$ has participated in a reaction, e.g. mineralisation, which has shifted the $CO_2$ to noble gas ratio in the mixed fluid at the extraction well.

By comparing the expected $^{13}C/^{12}C$ ratio of $CO_2$ in the mixed fluid at the extraction well, if no mineralisation has occurred, with the estimated $^{13}C/^{12}C$ ratio of $CO_2$ ratio in the mixed fluid at the extraction well, it can be determined whether or not mineralisation has occurred.

If the estimated $^{13}C/^{12}C$ ratio of $CO_2$ in the mixed fluid at the extraction well is the same as the expected $^{13}C/^{12}C$ ratio of $CO_2$ in the mixed fluid at the extraction well, it indicates that $CO_2$ has not participated in any reactions and that no mineralisation has occurred.

If the estimated $^{13}C/^{12}C$ ratio of $CO_2$ ratio in the mixed fluid at the extraction well is different from the expected $^{13}C/^{12}C$ ratio of $CO_2$ in the mixed fluid at the extraction well, it indicates that the $CO_2$ has participated in a reaction, e.g. mineralisation, which has shifted the $^{13}C/^{12}$ C ratio of $CO_2$ in the mixed fluid at the extraction well.

Example:

a) Mixing ratio of injectate vs. background reservoir fluid: 20% vs. 80% = 1:4
b) Background reservoir fluid $^{13}C/^{12}C$ ratio of $CO_2$: -2
c) Estimated injectate $^{13}C/^{12}C$ ratio of $CO_2$: -5
d) Estimated $^{13}C/^{12}C$ ratio of $CO_2$ in mixed fluid at extraction well: -1,5

If no mineralisation occurs between the injection well and the extraction well, the estimated injectate $^{13}C/^{12}C$ ratio of $CO_2$ should not change, neither should the estimated background reservoir fluid $^{13}C/^{12}C$ ratio of $CO_2$. Thus, the expected $^{13}C/^{12}C$ ratio of $CO_2$ in the mixed fluid at the extraction well should be somewhere between the estimated $^{13}C/^{12}C$ ratio of $CO_2$ in the background reservoir fluid and the estimated $^{13}C/^{12}C$ ratio of $CO_2$ in the injectate. The mixing ratio of background reservoir fluid and injectate is used to determine how much the $^{13}C/^{12}C$ ratio of $CO_2$ in the background reservoir fluid and the $^{13}C/^{12}C$ ratio of $CO_2$ in the injectate each contribute to the expected $^{13}C/^{12}C$ ratio of $CO_2$ in the produced fluid.

Background reservoir fluid $^{13}C/^{12}C$ ratio of $CO_2$ (when accounting for mixing ratio) = Background reservoir fluid $^{13}C/^{12}C$ ratio of $CO_2$*mixing percent of background reservoir fluid/100= -2*0.8= -1.6

Estimated injectate $^{13}C/^{12}C$ ratio of $CO_2$ (when accounting for mixing ratio) = Estimated injectate $^{13}C/^{12}C$ ratio of $CO_2$*mixing percent of injectate/100= -5*0.2= -1

Expected $^{13}C/^{12}C$ ratio of $CO_2$ in mixed fluid at extraction well if no mineralisation occurs = Background reservoir fluid $^{13}C/^{12}C$ ratio of $CO_2$ + Estimated injectate $^{13}C/^{12}C$ ratio of $CO_2$ (when accounting for mixing ratio) = -1.6 +(-1) = -2.6

Since the estimated $^{13}C/^{12}C$ ratio of $CO_2$ in the mixed fluid (-1.5) at the extraction well is not equal to the expected $^{13}C/^{12}C$ ratio of $CO_2$ in the mixed fluid at the extraction well (-2.6), but higher, this indicates that some mineralisation has occurred between the injection well and the extraction well.

The above example is only for monitoring the $^{13}C/^{12}C$ ratio of $CO_2$. Advantageously, combining monitoring of the $^{13}C/^{12}C$ ratio of $CO_2$ and the ratio of $CO_2$ to noble gas between the injectate and the mixed fluid at the extraction well, may provide more accurate and/or more reliable information, than using a single marker.

In preferred embodiments, monitoring mineralisation of $CO_2$ comprises quantifying the level of $CO_2$ mineralisation. For mineralisation and carbon isotopes, $^{13}C$ preferentially partitions into mineralised $CO_2$ relative to $^{12}C$ when temperature is <192°C, meaning any remaining $CO_2$ is depleted in $^{13}C$ and the $^{13}C/^{12}C$ ratio decreases. When temperature >192°C this trend inverts. The magnitude of the shifted $^{13}C/^{12}C$ ratio of $CO_2$ in the mixed fluid compared to the expected $^{13}C/^{12}C$ ratio of $CO_2$ in the mixed fluid may further be used to quantify the mineralisation of $CO_2$. The magnitude of this partitioning is dependent on temperature. Thus, in order to quantify $CO_2$ mineralisation more precisely, it is important to also know the storage reservoir temperature.

Thus, in preferred embodiments, the method further includes determining/measuring the temperature in the flow path between the injection well and the extraction well and the expected $^{13}C/^{12}C$ ratio of $CO_2$ is also based on the determined/measured temperature in the flow path.

Using this temperature, a fractionation factor (i.e. how much will the isotopes fractionate) can be calculated for carbon isotopes when mineralisation occurs at the storage reservoir temperature. These are derived from established equations that are published in peer reviewed academic literature. Quantifying mineralisation using these fractionation factors is not a process because it depends on the specific systematics of isotope fractionation. However, in principle it works as follows:
If you have an injected $CO_2$ $^{13}C/^{12}C$ of +10 and the carbon isotope fractionation factor for $^{13}C/^{12}C$ at the geological reservoir temperature is +10, then if 90% of the $CO_2$ is mineralised, one would expect the remaining 10% of injected $CO_2$ to have a $^{13}C/^{12}C$ value of +19.

This is a **substantial** simplification of the process. The magnitude of shift in $^{13}C/^{12}C$ varies depending on isotope fractionation systematics, mixing with background fluids and the overprinting effect that results from loss of injectate to mineralisation. The variables can all be predicted and constrained. The simplified example is provided for context of how the method works in practise.

Thus, in order to improve quantification of $CO_2$ mineralisation, the method preferably comprise a way to distinguish the signals from injectate and background reservoir fluid.

The present inventors have found that detecting a shift in the ratio of $^{18}O/^{16}O$ of $H_2O$, between the injectate and the mixed fluid at the extraction well, may indicate that the mixed fluid at the extraction well comprises at least a portion of the injectate, which may help distinguish between the injectate and background signals in the mixed fluid at the extraction well. In other words, a shift in the ratio of $^{18}O/^{16}O$ ($\delta^{18}O_{H2O}$) may be used as a non-reactive tracer of the injectate. The ratio of $^{18}O/^{16}O$ is not affected by mineralisation of $CO_2$, because $\delta^{18}O_{H2O}$ is mainly controlled by water values. Thus, detection

of a shift in the ratio of $^{18}O/^{16}O$ may indicate that injectate is in fact present in the mixed fluid at the extraction well, whilst a shift in the $^{13}C/^{12}C$ ratio ($\delta^{13}C_{CO2}$) and a decrease in $CO_2$ to noble gas ratio indicate that mineralisation has occurred. Together, these two indications would provide two separate indicators confirming the occurrence of mineralised $CO_2$. In other words, using the ratio of $^{18}O/^{16}O$ as a way of monitoring the (non-reactive) carrier of the carbon dioxide injectate, enables a user to ensure that any shift in the $^{13}C/^{12}C$ ratio of $CO_2$ relates to mineralisation of carbon dioxide and not, for example, to background interference or other similar phenomena.

Thus, in preferred embodiments of the method according to the present invention, the injectate has a $^{18}O/^{16}O$ ratio of water, which is distinct from the $^{18}O/^{16}O$ ratio of water in the background reservoir fluid. In preferred embodiments, the background reservoir fluid data further includes an estimated $^{18}O/^{16}O$ ratio of water in the background reservoir fluid at the extraction well and furthermore, performing the first measurements and the second measurements further comprises estimating the $^{18}O/^{16}O$ ratio of water in the injectate and in the mixed fluid at the extraction well, respectively.

**Further embodiments:**

In preferred embodiments, the tracer test comprises:

injecting a fluid comprising a known concentration of tracer into the geological reservoir through the injection well, extracting a plurality of fluid samples from the extraction well at different times and measuring the concentration of tracer in the extracted fluid samples, until tracer is detected in a fluid sample.

In preferred embodiments, the period of time it takes a fluid, injected through the injection well into the geological reservoir, to reach the extraction well, is determined when the tracer is detected for the first time in a fluid sample,

In preferred embodiments, the estimated mixing ratio of background reservoir fluid and injectate at the extraction well is determined by:

injecting a tracer fluid with a known concentration of tracer into the geological reservoir and, after the period of time, extracting a fluid sample from the extraction well comprising the tracer,
measuring the concentration of tracer in the extracted fluid sample, and
comparing the concentration of tracer in the tracer fluid with the concentration of tracer in the extracted fluid sample.

The tracer may be a natural and/or inherent tracer, e.g. $^{13}C$, $^{18}O$, or a noble gas. The tracer may be an added or artificial tracer, e.g. $^{14}C$, $SF_6$, or 1-ns.

In preferred embodiments, the tracer is a non-reactive tracer, preferably a tracer which is not found in the background reservoir fluid, such as an artificial tracer.

In preferred embodiments, the background reservoir fluid data is obtained by: extracting a background fluid sample consisting of background reservoir fluid from the geological reservoir, preferably from the extraction well, and performing background measurements on the background fluid sample, in order to estimate the $^{13}C/^{12}C$ ratio of $CO_2$ in the background reservoir fluid and/or in order to estimate the $CO_2$ to noble gas ratio in the background reservoir fluid and/or the background $^{18}O/^{16}O$ ratio of water in the background reservoir fluid.

In preferred embodiments, the estimated $^{13}C/^{12}C$ ratio of $CO_2$ in the background reservoir fluid is indicative of the $^{13}C/^{12}C$ ratio of $CO_2$ in the background reservoir fluid at the extraction well, when no injectate is present and/or the estimated $CO_2$ to noble gas ratio in the background reservoir fluid is indicative of the background $CO_2$ to noble gas ratio of the background reservoir fluid at the extraction well, when no injectate is present and/or the estimated $^{18}O/^{16}O$ ratio of water, indicative of the $^{18}O/^{16}O$ ratio of water in the background reservoir fluid at the extraction well, when no injectate is present.

In such embodiments, the background measurements are preferably performed on the background reservoir fluid extracted from the extraction well, before any fluid e.g. injectate has been injected into the injection well. In other embodiments, it is assumed that the background reservoir fluid data is the same over a large area of the geological reservoir, and the background measurements are performed on fluid samples extracted from other extraction wells where there is no mixing of background reservoir fluid and injectate, but only background reservoir fluid. In alternative embodiments, a fluid comprising no $CO_2$ and noble gas may have been injected into the injection well when the background measurements are taken. If this is the case, the background reservoir data already accounts for the mixing ratio of background reservoir fluid and injectate and it is not necessary to account for the mixing ratio when calculating the expected $^{13}C/^{12}C$ ratio of $CO_2$ and/or the expected $CO_2$ to noble gas ratio.

In preferred embodiments, performing the first measurements includes performing direct or indirect measurement which can be used to estimate the total amount of $^{12}C$ and $^{13}C$ of $CO_2$ and/or the total amount of $CO_2$ and noble gas and/or the total amount of $^{18}O$ and $^{16}O$ of water in the injectate or in one or more of the plurality of fluids which has been merged to form the injectate.

In preferred embodiments, the extracted fluid sample is separated into different phases, before performing the second measurements on the extracted fluid sample, wherein performing the second measurements includes performing direct or indirect measurement which can be used to estimate the total amount of $^{12}C$ and $^{13}C$ of $CO_2$ and/or the total amount of $CO_2$ and noble gas and/or the total amount of $^{18}O$ and $^{16}O$ of water in the mixed fluid at the extraction well.

In preferred embodiments, the total amount of $CO_2$ includes $CO_{2(g)}$ and/or dissolved inorganic carbon (DIC) comprising $CO_{2(aq)}$ $H_2CO_3$, $HCO_3^-$, $CO_3^{2-}$. In preferred embodiments, the total amount of $^{12}C$ and $^{13}C$ of $CO_2$ includes $CO_{2(g)}$ and/or dissolved inorganic carbon (DIC) comprising $CO_{2(aq)}$ $H_2CO_3$, $HCO_3^-$, $CO_3^{2-}$. In preferred embodiments, the total amount of noble gas consists of noble $gas_{(g)}$. In preferred embodiments, the total amount of $^{18}O$ and $^{16}O$ of water does not include $^{18}O$ and $^{16}O$ of $CO_2$.

In preferred embodiments, performing the first measurements and/or the second measurements includes using mass spectroscopy and/or gas chromatography.

In preferred embodiments, the injectate is provided by merging a plurality of fluids including a first fluid, a second fluid and third fluid at controlled ratios. In preferred embodiments, the first fluid is a steam condensate obtained from a geothermal power plant, the second fluid is a gas stream comprising non-condensable gases obtained from the geothermal power plant and the third fluid is separated water, such as brine, obtained from the geothermal power plant.

In preferred embodiments, the noble gas is Helium, such as $^3He$ or $^4He$. In other embodiments, the noble gas is Neon or Argon, such as $^{20}Ne$ or $^{36}Ar$. The choice of noble gas depends on the composition of the injectate, such as the source of $CO_2$, and which noble gases naturally occurs in the injectate.

In preferred embodiments, the geological reservoir comprises or is a subterranean formation, such as a basaltic rock formation and/or a mafic or ultramafic rock formation.

In preferred embodiments, the geological reservoir comprises a network of flow paths comprising a background reservoir fluid.

In some embodiments, the method may comprise a plurality of extraction wells located at different predetermined distances/locations from the injection well within the geological reservoir. In such embodiments, the method may include extracting a mixed fluid sample from each of the plurality of extraction wells in order to estimate/determine a $^{13}C/^{12}C$ ratio of $CO_2$, a $CO_2$ to noble gas ratio and a $^{18}O/^{16}O$ ratio of water at each location.

Definitions:

In the context of the present invention, the term feed may be used interchangeably with the term injectate. Both terms are referring to a fluid comprising $CO_2$ (and noble gas such as $^3He$) injected into a geological reservoir through an injection well. Preferably the feed/injectate further comprises water and the $CO_2$ is dissolved in the water. Preferably, the feed/injectate is a single-phase fluid. The injectate may be provided by merging a plurality of fluids, preferably at controlled ratios. These fluids may e.g. include a steam condensate obtained from a geothermal power plant, a gas stream comprising non-condensable gases obtained from the geothermal power plant and separated water, such as brine, obtained from the geothermal power plant.

In the context of the present invention, the term produced fluid may be used interchangeably with the term mixed fluid. Both term refers to a fluid comprising a mixture of background reservoir fluid and injectate/feed. The produced fluid/mixed fluid may be extracted from an extraction well arranged a predetermined distance from the injection well where the injectate/feed is injected and analysed in order to determine whether mineralisation of $CO_2$ has occurred between the injection well and extraction well.

In the context of the present invention, producing a fluid downstream of the storage reservoir, may be understood as the natural mixing of the injectate/feed with the background reservoir fluid in the geological reservoir at a location different than the injection well. In this way, a mixed fluid comprising injectate/feed and background reservoir fluid is formed/produced within the geological reservoir, as a result of injection of the injectate/feed.

In the context of the present invention, the term background reservoir fluid is to be understood as fluid present within the flow paths of the geological reservoir before fluid is injected through the injection well into the geological reservoir and mixes with the background reservoir fluid to form a mixed fluid/produced fluid. The mixing ratio of background reservoir fluid and injectate may be determined by injecting a tracer fluid with a known concentration into the geological reservoir and extracting a fluid sample at the extraction area comprising the tracer, measuring the concentration of tracer in the extracted fluid sample, and comparing the concentration of tracer in the tracer fluid with the concentration of tracer in the extracted fluid sample.

In the context of the present invention, the terms injection well and reinjection well are used interchangeably and are to be understood as any kind of structure providing for a possibility of placing a fluid, such as the injectate/feed, underground in a downwardly direction, such as e.g. a device that places fluid into rock formations, such as basalt or basaltic rock, and porous rock formations, such as sandstone or limestone, or into or below the shallow soil layer.

In the context of the present invention the term extraction well is to be understood as any kind of structure providing for a possibility of extracting fluids or fluid samples from deep underground in a upward direction, such as e.g. a

device that extracts fluids from a geological reservoir comprising rock formations, such as basalt or basaltic rock, and porous rock formations, such as sandstone or limestone, or from below the shallow soil layer. The term extraction well includes both production wells and monitoring wells.

In the context of the present invention, the term geological reservoir may be used interchangeably with the term geothermal reservoir and the term storage reservoir. In the context of the present invention the term geological/geothermal/storage reservoir is to be understood as an underground structure, e.g. basaltic rock, comprising fractures that expands in other directions than upwardly and downwardly. The fracture networks are integral to the permeability of the geological reservoir. These fracture networks are filled with background reservoir fluid, which mixes with injected fluid/injectate when it enters the geological reservoir.

In the context of the present invention, the term estimated ratio (e.g. estimated $^{13}C/^{12}C$ ratio of $CO_2$ in injectate or estimated $CO_2$ to noble gas ratio of the mixed fluid) refers to a ratio which is either measured or calculated based on several measurements and possibly assumptions. Estimated ratios may also be referred to as determined ratios.

## Brief Description of Drawings

Embodiments of the invention are described with reference to the accompanying drawings, in which:

**Figure 1** shows a schematic diagram of a phase separation system for a fluid produced from a monitoring well, according to an embodiment;

**Figure 2** is a graph showing $^3He/^4He$ ratios normalised to atmosphere ($R_A$) plotted against $^4He/^{20}Ne$, showing binary mixing between a primary magmatic ($R_A$ = 15.1; $^4He/^{20}Ne$ >35) and secondary meteoric water ($R_A$ = -1; $^4He/^{20}Ne$ = ~0.3) component. Local mantle $R/R_A$ is derived using an inverse mixing hyperbola calculation;

**Figure 3** is a graph showing $CO_2/^3He$ plotted against stable carbon isotope ratios ($\delta^{13}C$) of $CO_2$ relative to the Vienna Pee Dee Belemnite (VPDB) standard;

**Figure 4** is a graph showing oxygen ($\delta^{18}O$) and hydrogen ($\delta^2H$) isotope ratios of $H_2O$ from equilibrated samples in Table 3 reported relative to the Vienna Standard Mean Ocean Water (VSMOW) standard;

**Figure 5** is a graph modelling evolution of gas inlet $CO_2/^3He$ and $\delta^{13}C_{CO2}$ as $CO_2$ dissolves in the scrubbing tower and the resulting $CO_2/^3He$ and $\delta^{13}C_{CO2}$ of the dissolved $CO_2$;

**Figure 6(A):** Modelled expected $CO_2/^3He$ and $\delta^{13}C_{CO2}$ for monitoring wells if no modification of $CO_2$ occurs in the reservoir, calculated using the background mixing ratios of **Table 1** and the relative concentrations of DIC in the injectate and background reservoir fluids;

**Figure 6(B):** Modelled evolution of injectate $CO_2/^3He$ and $\delta^{13}C_{CO2}$ as $CO_2$ is mineralised in the Carbfix storage reservoir;

**Figure 7(A):** Modelled expected $\delta^{13}C_{CO2}$ and $\delta^{18}O_{H2O}$ for monitoring wells if no modification of $CO_2$ occurs in the reservoir, calculated using the background mixing ratios of **Table 1** and the relative concentrations of DIC in the injectate and background reservoir fluids;

**Figure 7(B):** Modelled evolution of injectate $\delta^{13}C_{CO2}$ and $\delta^{18}O_{H2O}$ as $CO_2$ is mineralised and fluids mix in the storage reservoir.

**Figure 8:** Illustrates a schematic diagram of a system comprising a production well for extracting hot fluid from a geological reservoir, a geothermal power plant for producing power, a scrubbing tower for dissolving $CO_2$ in a condensate, and an injection well for injecting an injectate comprising $CO_2$ back into the geological reservoir. In preferred embodiments, the method of the present invention is used for monitoring mineralisation of $CO_2$ injected into a geological reservoir via. a system in accordance with figure 8.

## Detailed Description

In the present disclosure, reference is made to a number of terms, which have the meanings provided below, unless a context indicates to the contrary. The nomenclature used herein for defining compounds, in particular the compounds according to the invention, is in general based on the rules of the IUPAC organisation for chemical compounds, specifically the "IUPAC Compendium of Chemical Terminology (Gold Book)". For the avoidance of doubt, if a rule of the IUPAC organisation is in conflict with a definition provided herein, the definition herein is to prevail. Furthermore, if a compound structure is in conflict with the name provided for the structure, the structure is to prevail.

The term "comprising" or variants thereof is to be understood herein to imply the inclusion of a stated element, integer or step, or group of elements, integers or steps, but not the exclusion of any other element, integer or step, or group of elements, integers or steps.

The term "consisting" or variants thereof is to be understood to imply the inclusion of a stated element, integer or step, or group of elements, integers or steps, and the exclusion of any other element, integer or step or group of elements, integers or steps.

The term "about" herein, when qualifying a number or value, is used to refer to values that lie within ± 5% of the value specified. For example, if a temperature is specified to be about 5 to about 13 °C, temperatures of 4.75 to 13.65 °C are included.

Reference to physical states of matter (such as liquid or solid) refer to the matter's state at 25 °C and atmospheric pressure unless the context dictates otherwise.

Energy production is one of the major $CO_2$ emission sources, contributing significantly to global greenhouse gas emissions and climate change. Geothermal power plants are one means of such energy production. They offer a renewable and reliable energy source with low $CO_2$ emissions, though their development is limited to geologically suitable locations. Furthermore, some geothermal power plants incorporate $CO_2$ capture technologies, making them a cleaner and more sustainable alternative to fossil fuel-based power plants.

Geothermal power plants harness the heat from the Earth's interior, which is generated by the natural decay of radioactive materials and the residual heat from the planet's formation. This thermal energy is stored in geothermal reservoirs, which are typically located in regions with significant tectonic activity, such as near volcanic zones and along plate boundaries.

Reference is made to Figure 8, showing a schematic illustration of a geothermal power plant 800 for energy production. The geothermal power plant 800 of Figure 8 extracts hot fluid 803 from an underground geological reservoir 801 through a production well 802. At the geothermal power plant 800, the extracted fluid 803 is separated in a separator 804 into two fluid streams 805, 806, one of steam 805 and one of separated water 806, such as brine. In the power plant 800, the steam 805 is used to drive turbines connected to generators (not illustrated), which convert the mechanical energy into electricity.

The extracted fluid 803 from geological reservoirs 801 naturally comprises dissolved gases, including $CO_2$, $H_2S$, $H_2$, $N_2$, $CH_4$, He etc. These gases are a by-product of the geothermal energy production. After energy production, it is desired that the steam 805 is condensed to a condensate 809 and reinjected into the geological reservoir 801, preferably with the separated water 806, to sustain the geological reservoir 801. However, only a portion of the gases originally part of the extracted fluid re-condense with the steam, leaving the rest, so-called non-condensable gases, including $CO_2$, as a gaseous by-product of the thermal energy production. These gases are normally removed from the condenser by vacuum pumps or ejectors and vented into the atmosphere.

However, in the system illustrated in Figure 8, $CO_2$ is not vented into the atmosphere after power production. As can be seen in Figure 8, two pipes connect the power plant 800 to a scrubbing tower 811 (also referred to as an absorption tower). One pipe is configured for transporting the non-condensable geothermal gases 810, including $CO_2$, to the scrubbing tower 811, whereas the other pipe is configured for transporting the condensate 809 to the scrubbing tower 811. The scrubbing tower 811 is configured for absorption of some of the non-condensable geothermal gases, including $CO_2$, into the condensate 809, or any other water stream, under certain conditions, such that a gas-charged condensate comprising dissolved $CO_2$ can be obtained. When $CO_2$ is absorbed into the condensate 809 in the scrubbing tower 811, $CO_2$ is dissolved in the condensate 809 and a portion of the dissolved $CO_2$ will react with water in the condensate 809 to form carbonic acid ($H_2CO_3$), which can further dissociate into bicarbonate ($HCO_3^-$) and carbonate ions ($CO_3^{2-}$).

$$CO_{2(g)} \rightleftharpoons CO_{2(aq)}$$

$$CO_{2(aq)} + H_2O \rightleftharpoons H_2CO_{3(aq)}$$

$$H_2CO_{3(aq)} \rightleftharpoons H^+_{(aq)} + HCO_3^-{}_{(aq)}$$

$$HCO_3^-{}_{(aq)} \rightleftharpoons H^+_{(aq)}{}^+ CO_3^{2-}{}_{(aq)}$$

At equilibrium, all the $CO_2$ species ($H_2CO_3$, $HCO_3^-$ and $CO_3^{2-}$) coexist in the aqueous solution. The relative amounts of each $CO_2$ species present, depend on the pH of the solution and the equilibrium constants for the reactions.

The resultant gas-charged condensate 812 may also comprise other fluids, such as the noble gas helium (He) and water. This gas-charged condensate 812 is then (re)injected into the geological reservoir 801, e.g. together with the separated water 806, as an injectate 808, through an injection well 807 (also sometimes referred to as a reinjection well) extending down into the geological reservoir 801. As illustrated in Figure 8, the injectate 808 may further be enriched with $CO_2$ from the surrounding air, by capturing $CO_2$ e.g. in the separated water 806, using a direct air capture (DAC) system.

The geological reservoir 801 may comprise a network of basaltic rock formations and fracture networks that are

integral to the permeability of the geological reservoir 801. These fracture networks are filled with reservoir fluid, which mixes with the injectate when it enters the geological reservoir 801. As the injectate 808 comprising $CO_2$ is injected into the geological reservoir 801, it starts to flow through different flow paths within the geological reservoir. When $CO_3^{2-}$ comes into contact with minerals of the geological reservoir 801, such as divalent cations (e.g. $Ca^{2+}/Mg^{2+}/Fe^{2+}$) present in reservoir rocks, the divalent cations binds with aqueous $CO_2$ to form solid carbonate minerals (e.g. calcium carbonate, magnesium carbonate, or ferrous carbonate).

$$(Ca, Mg, Fe)^{2+} + CO_3^{2-} = (Ca, Mg, Fe)CO3(aq)$$

This process is known as mineralisation. The key advantage of carbon mineralisation is that sequestered $CO_2$ is immobilised and cannot escape back to the atmosphere, thus reducing global warming. In this way, $CO_2$ from the extracted fluid 803 can be reinjected into the geological reservoir 801 and recaptured underground after power production at the geothermal power plant 800, such that less $CO_2$ is emitted to the atmosphere as a byproduct of the power production.

The present invention relates to a method for monitoring mineralisation of $CO_2$ injected into a geological reservoir. In preferred embodiment, the present invention relates to a method for monitoring mineralisation of $CO_2$ injected into a geological reservoir via. a system as described above with reference to Figure 8.

According to the method of the present invention, $CO_2$ mineralisation can be monitored by estimating the ratio of $^{13}C/^{12}C$ of $CO_2$ and/or $CO_2$/noble gas and/or $^{18}O/^{16}O$ in the injectate and comparing it to an estimated ratio of $^{13}C/^{12}C$ and/or $CO_2$/noble gas and/or $^{18}O/^{16}O$ in a mixed fluid extracted from an extraction well at a predetermined distance from the injection well.

When estimating the $^{13}C/^{12}$ C ratio of $CO_2$ in the injectate and/or the $CO_2$ to noble gas ratio in the injectate, in accordance with a preferred embodiment of the present invention, this may be done by performing first measurements on a sample taken from the injectate. However, it may also be done by performing the first measurements on several samples, taken from a plurality of fluids which has been merged to form the injectate and then estimating the $^{13}C/^{12}$ C ratio of $CO_2$ in the injectate and/or the $CO_2$ to noble gas ratio in the injectate, based on the combined results. The plurality of fluids may e.g. be the separated water 806 and the gas-charged condensate 812.

When the amount of $CO_2$ and the $^{13}C/^{12}C$ ratio of $CO_2$ is estimated, all the inorganic carbon of $CO_2$, gaseous and dissolved, has to be counted in, irrespective of the speciation it is found in. As described above, dissolved $CO_2$ may be on different forms i.e. $CO_{2(aq)}$, $H_2CO_{3(aq)}$, $HCO_{3(aq)}$ or $CO_3^{2-}{}_{(aq)}$. (This may also be referred to as dissolved inorganic carbon (DIC)). Thus, the total amount of $CO_2$ in a fluid includes $CO_{2(g)}$ and/or DIC. However, it may not be necessary to measure all forms of $CO_2$ separately. What is actually measured may depend on the phase of the fluid and in case the fluid is an aqueous solution, pH of the solution to be measured, because the pH controls how much of the dissolved $CO_2$ is on the different forms: $CO_{2(aq)}$, $H_2CO_{3(aq)}$, $HCO_{3(aq)}$ or $CO_3^{2-}{}_{(aq)}$. Thus, if one form is measured and the pH is known, the total amount of $CO_2$ may be estimated. The different forms of $CO_2$ can also be converted to $CO_2$ using various methods such as acid digestion and titration, which can then be quantified using a variety of analyses (e.g. gas chromatography, infrared gas analysis, etc). Isotope ratios ($^{13}C/^{12}C$) may be measured using a mass spectrometer.

## Examples

The experiments of the following example were performed in a system as described with reference to Figure 8. However, instead of comprising one monitoring well, the system comprises a plurality of monitoring wells, located at different distances from the injection well 807. The monitoring wells are arranged further and further away from the injection well 807, such that the extracted fluid from the monitoring wells comprises a decreasing ratio of injectate 808 compared to background reservoir fluid.

### Geological site

The site on which the following experiments were carried out is located at Iceland's largest geothermal power plant, Hellisheiði.

The project has been operational since 2014 and captures ~12,000 tonnes of $CO_2$ and ~6,000 tonnes of $H_2S$ annually from the power plant gas stream by dissolution into water. Gas-charged fluids are then re-injected into the ~260°C geothermal reservoir where in-situ $CO_2$ mineralisation is known to occur within months of injection.

The geothermal reservoir below Hellisheiði power plant is comprised of fractured and hydrothermally altered olivine tholeiitic basalts. Alternating sequences of sub-glacial hyaloclastites and inter-glacial lavas dominate until -1400 metres above sea level (masl), below which the base of the Hengill volcano is found. Near-vertical intrusions dissect horizontal lavas and hyaloclastites to within a few hundred metres of the surface across the reservoir. The emplacement of these intrusions created fracture networks that are integral to the permeability of the geothermal reservoir.

The upper groundwater system is separated from the geothermal reservoir by a low permeability clay cap rock

found between -400 and -600 masl. Alteration minerals found in the reservoir vary with temperature and therefore depth, with chlorite, epidote, prehnite, wollastonite, wairakite, albite, calcite, pyrite, pyrrhotite, quartz and sulfides all being recorded. The target $CO_2$ storage zone is in the chlorite-epidote alteration zone, with recorded temperatures of 220-280°C.

**$CO_2$ capture**

Hellisheiði power plant is fed by >44 two phase (steam and water) geothermal production wells from three main areas: Skarðsmýrarfjall, Reykjafell, and Hverahlíð. This generates 303 MWe of electricity for Iceland's national grid and 200 MWth of hot water for Reykjavik district heating system. Approximately 0.5% of the steam mass is comprised of non-condensable gases, mainly $CO_2$ (63 vol%), $H_2S$ (21 vol%) and $H_2$ (14 vol%), with the remaining 2 vol% $N_2$, $CH_4$ and Ar. This corresponds to an annual production of ~33,000 tonnes of $CO_2$ and ~8,000 tonnes of $H_2S$ from the power plant. In order to reduce and eventually eliminate these emissions, $CO_2$ and $H_2S$ are dissolved in water and re-injected into the geothermal reservoir where in-situ $CO_2$ mineralisation is known to occur within months of injection.

Gases are fed into the base of a scrubbing tower adjacent to the power plant where they dissolve into 20°C condensed steam sourced from the power plant turbines at a flow rate of 50-55 l/s and pressure of 6 bar-a. 56% of the $CO_2$ and 97% of the $H_2S$ that enters the tower is dissolved and captured, as disclosed for example in EP4031267A1 (SIGFUSSON et al), which is incorporated herein by reference in its entirety. The average dissolved gas concentration of the gas-charged condensate leaving the scrubbing tower is 102 mM dissolved inorganic carbon (DIC) and 73 mM dissolved sulfur (DS), with a solution pH of between 3.5 and 4. Gas-charged condensate is then transported to the reinjection well HN-16 via a 1.5km long polyethylene pipe at 9 bar-a.

**$CO_2$ injection**

HN-16 is a 1.9km deep water re-injection well within the Húsmúli reinjection zone of Hellisheiði geothermal field. The five reinjection wells at Húsmúli (including HN-16) account for ~10 Mt of the -28 Mt of separated water and condensate annually reinjected at Hellisheiði. HN-16 and HN-14 (the back-up $CO_2$ injection well) have been retrofitted with a 750m long 4" stainless steel pipe within the existing carbon steel casing that extends for 660m. This is to protect the steel casing from the corrosive (pH 3.5-4) gas-charged condensate, which is injected via this stainless steel pipe at 30-60 l/s. These fluids take two to four minutes to reach the bottom of this piping where they then mix with power plant separated water and is co-injected as an injectate via the carbon steel casing at a rate of 15-130 l/s (Clark et al., 2020). These waters are 55-140°C, have a pH of 6-9.1 and a DIC concentration of 0.4-1.5 mM.

Clark et al., (2018) modelled the downhole mix of gas-charged condensate and power plant separated water on the flow rates reported in Sigfússon et al., (2018). They report a 70% 80°C separated water and 30% 20°C gas-charged condensate mix, with a pH of 5.4, DIC of 31 mM and DS of 22 mM before the tower scale up in July 2016, and a pH of 4.7, DIC of 51 mM and DS of 31 mM after this period. This mixture takes 10-45 minutes to reach the main feedzones in HN-16 which are located between -700 and -1600 masl. These highly permeable zones were identified during the drilling of geothermal wells and relate to fracture networks that developed during intrusion emplacement and regional tectonic movements. The injectate is denser than surrounding reservoir fluids (0.95-0.99 g/cm3 vs. 0.78-0.84 g/$cm^3$) because of its lower temperature and dissolved gas content. This means that the injectate sink once in the reservoir, which ensures solubility trapping for injected $CO_2$ and lengthens fluid flow pathways. Longer flow pathways increase the water-rock interactions that are integral to in-situ $CO_2$ mineralisation and reduce the risk of thermal breakthrough from cold injectatein nearby production wells which would result in a depletion of the geothermal resource.

**Monitoring and verification**

The fate of injected $CO_2$ (and $H_2S$) is observed via four monitoring wells that are downflow from injection well HN-16. Subsurface fluid flow from the Húsmúli reinjection zone is towards the Skarðsmýrarfjall production area to the northeast. This is due to NE-SW trending fractures associated with the regional tectonics and the pressure gradient created from ~10 Mt/year fluid production from six wells (HE-31, HE-48, HE-44, HE-33, HE-05 and HE-08). HE-31, HE-48, HE-44 and HE-33 are used as monitoring wells in Carbfix. These wells are 1000-1500m from HN-16, 1400-2350m deep and have feedzones between -300 and -1600 masl. The relative proportions of injected and background reservoir fluids in each monitoring well are known from a series of non-reactive tracer tests conducted in the Húsmúli reinjection wells (Kristjansson et al., 2016; Ratouis et al., 2022).

For the purposes of this study, we refer to the results of the continuous tracer test conducted from July 2014 to July 2015, where 274kg of the inert tracer 1-naphthalenesulfonic acid sodium salt (1-ns) was co-injected with gas-charged condensate at a constant proportion into the injection well HN-16 (Ratouis et al., 2022). Tracer recovery rates are disclosed in Table 1. Both tracer tests indicated fast flowing pathways consistent with fluids flowing through a fracture system

(Ratouis et al., 2022). As expected, the wells closest to the injection well (HE-31 and HE-48) experience quicker tracer breakthrough periods and recover the higher proportions of tracer compared to wells further from HN-16 (HE-44 and HE-33).

**Table 1:** Results of the 2014-2015 continuous tracer test from the Carbfix injection well HN-16. 274kg of thermally stable 1-ns tracer was co-injected with Carbfix gas-charged condensate at a constant ratio to determine fluid flow paths, rates, and background mixing ratios in monitoring wells. Data are from Ratouis et al., (2022).

| | **First arrival** | **Recovery** | **Background mixing ratio** |
|---|---|---|---|
| **HE-31** | 14 days | 22% | 75% |
| **HE-48** | 29 days | 22% | 77% |
| **HE-44** | 79 days | 8% | 90% |
| **HE-33** | 456 days | 2% | 97% |

The co-injection of inert tracer with gas-charged condensate enabled a comparison of non-reactive (1-ns) tracer and reactive (DIC and DS) tracer recovery rates in the monitoring wells to determine the proportion of injected $CO_2$ and $H_2S$ retained and mineralised within the reservoir. To date, there have been two publications that quantify the extent and time frame of $CO_2$ mineralisation in the reservoir. Gunnarsson et al., (2018) reported that >50% of injected $CO_2$ and 76% of injected $H_2S$ mineralised between injection well HN-16 and the first monitoring well HE-31 within 4-9 months of injection. These figures were updated by Clark et al., (2020) who found that >60% of injected $CO_2$ and >85% of injected $H_2S$ within four months of injection. This increase was attributed to the doubling of the scrubbing tower capacity in July 2016 and the subsequent decrease in injectate pH.

Both studies report that the injectivity of HN-16 has remained stable throughout, indicating that the permeability of the reservoir has been unaffected by mineralisation.

**Materials and Methods**

Sample collection

Liquid and gas samples were collected from across the study area. Samples were collected from production and/or monitoring wells, and from the injectate.

*Wells*

Geothermal production wells HE-03 and HE-07 in Hellisheiði, and HE-54 and HE-60 in Hverahlíð were sampled, along with monitoring wells HE-31, HE-48, HE-44, and HE-33. Monitoring wells are also active production wells that feed back into Hellisheiði geothermal power station.

**Figure 1** shows a schematic diagram of a phase separation system 101 for a fluid produced from a monitoring well, according to an embodiment.

The system 101 was purged for five minutes prior to sample collection.

As shown in **Figure 1,** the well 110, is equipped with a wellhead 111, are wet-steam wells. The single phase is flashed through a pressure control valve 112 near the wellhead 111, thereby producing a mixture of water 121 and steam 122. These two phases were collected separately using a Webre separator 120 at the wellhead 111. The system 101 also comprises a first and cooling coil 131 to cool the water phase 121, and a second cooling coil 132 to cool the steam phase 122.

The cooled water phase is collected as water samples 121a

The second cooling coil is associated with a second separator 125 which results in the steam 122 condensing to form a liquid condensate 123, which is then collected into 60µl Nalgene bottles, and also produces a third phase 124 comprised of non-condensable gases which contains in particular noble gases and $CO_2$ isotopes. These samples were collected in 3/8" refrigeration grade copper tubes. Atmospheric back-flow and contamination was prevented by connecting the end of the copper tube to hosing that was placed in a bucket of water. As with water samples 121a, the copper tubes were purged for five minutes prior to sample collection. Tubes were sealed using two steel clamps specifically designed to provide a cold weld seal and prevent helium leakage. The clamp furthest from the wellhead was sealed first to ensure no contamination from atmosphere.

In other words, Figure 1 shows how a fluid sample extracted from an extraction well is separated into three different phases, before measurements are performed on the different phases of the extracted fluid sample by measuring

the amount of $^{12}C$ and $^{13}C$ of $CO_2$, $^{3}He$, $^{18}O$ and $^{16}O$ in the phases.

Abundance fractions for compounds (e.g., water, $CO_2$, noble gases) are as follows for each sample 124, 123, 121a shown in **Figure 1:.**

Non-condensable gases *(g)* 124:

Noble gases *f*=>99%
$CO_2$ *f*=~99%
$H_2O$ *f*=0%

Steam condensate (s) 123:

Noble gases *f*=<1%
$CO_2$ *f*=~<1%
$H_2O$ *f*=18%

Water (w) 121a:

Noble gases *f*=
$CO_2$ *f*=~8%
$H_2O$ *f*= 82%

Data generated from these three phases (water, steam, and non-condensable gas) are then combined to correct for the wellhead separation process and provide the total well discharge i.e. to estimate a $^{13}C/^{12}C$ ratio of $CO_2$ and/or the $CO_2$ to $^{3}He$ ratio and/or the $^{18}O/^{16}O$ ratio of water in the extracted fluid sample.

*Injectate*

In this experiment, the injectate was provided by contacting the steam condensate and the non-condensable geothermal gases obtained from the geothermal power plant in a scrubbing tower to form a gas-charged condensate. The gas-charged condensate was then merged with the separated water obtained from the geothermal power plant.

To estimate the $^{13}C/^{12}C$ ratio of $CO_2$, the $CO_2$ to $^{3}He$ ratio and the $^{18}O/^{16}O$ ratio of water in the injectate, samples of the power plant non-condensable gases were collected from the inlet and outlet (geothermal gas and gas-charged condensate) gas pipelines of the Carbfix scrubbing tower using the copper tube method described above. Sampling apparatus were connected directly into the gas lines and therefore did not require a separator or funnel for collection. Water samples of the steam condensate used for gas dissolution in the Carbfix scrubbing tower, and the power plant separated water which was co-injected with the Carbfix gas-charged condensate, were collected from before the Carbfix scrubbing tower and injection well respectively. Data generated from these samples are then combined to calculate the geochemical fingerprint of the Carbfix injectate i.e. to estimate the ratio of $^{13}C/^{12}C$ of $CO_2$, the $CO_2$ to $^{3}He$ ratio and the ratio of $^{18}O/^{16}O$ of water in the injectate.

<u>Geochemical analyses</u>

All geochemical analyses were undertaken at the Scottish Universities Environmental Research Centre (SUERC) in East Kilbride, Scotland. Copper tubes were halved using an additional steel clamp in the middle of the tube to allow for separate noble gas and $CO_2$ isotope analysis.

*Noble gas measurements*

Copper tubes were connected to an all-metal ultra-high vacuum system and prepared for analysis. The concentration and isotopic composition of noble gases were measured on an MAP 215-50 noble gas mass spectrometer. Mass fractionation, sensitivity and the reproducibility of analyses were determined by repeated analysis of HESJ international standard (for He and air for Ne). Reproducibility of noble gas concentrations and isotope ratios were typically better than 5%.

*$^{3}He/^{4}He$ reporting and corrections*

Measured $^{3}He/^{4}He$ ratios ($R_M$) are reported relative to the atmosphere $^{3}He/^{4}He$ ($R_A = 1.4 \times 10^{-6}$) and corrected

for air contamination ($R_c$) using the method outlined in Füri et al., (2010) and Hilton et al., (1996):

$$\frac{R_C}{R_A} = \left(\left(X * \frac{R_M}{R_A}\right) - 1\right)/(X - 1) \qquad \text{(Equation 1)}$$

where $\frac{R_C}{R_A}$ is the air corrected $^3He/^4He$ reported relative to $^3He/^4He$ of atmosphere, $\frac{R_M}{R_A}$ is the measured $^3He/^4He$ reported relative to $^3He/^4He$ of atmosphere, and X corresponds to:

$$\left(\frac{\left(\frac{^4He}{^{20}Ne}\right)m}{\left(\frac{^4He}{^{20}Ne}\right)a}\right) * \beta_{Ne}/\beta_{He} \qquad \text{(Equation 2)}$$

where $\beta$ is the Bunsen coefficient of 1.25 at the ambient temperature of 10°C (Füri et al., 2010; Byrne et al., 2021).

*Gas chromatography (GC) measurements*

Bulk gas concentrations of copper tube samples were measured using a Pfeiffer Vacuum QMS 200 quadrupole mass spectrometer and Hewlett Packard 5890 Series 11 Gas Chromatograph with uncertainties of ± 1%. Major gas concentrations are corrected for air.

*Isotope ratio measurements*

Ratios of stable isotopes in the constituent elements of $CO_2$ and $H_2O$ were measured in the gas and liquid samples respectively. Data are reported as delta (δ) values per mil (‰), meaning parts per thousand difference relative to international reference standards:

$$\delta_{sample} = \left(\frac{R_{sample}}{R_{standard}} - 1\right) \times 1000 \qquad \text{(Equation 3)}$$

where $\delta_{sample}$ is the converted sample isotope value and R corresponds to the isotope ratio ($^{13}C/^{12}C$, $^{18}O/^{16}O$ and $^2H/^1H$) for the sample and standard.

*Carbon isotope ratios*

Ratios of stable carbon ($^{13}C/^{12}C$) isotopes of $CO_2$ in the copper tube samples were measured on a VG SIRA II Dual Inlet Isotope Ratio Mass Spectrometer using an internal standard produced from international reference materials NBS19 and IAEA-CO-1. Isotope data are reported relative to international reference standard Vee Pee Dee Belemnite (VPDB), with 1σ uncertainties of ± 0.1‰.

*Water isotope ratios*

Ratios of stable oxygen ($^{11}O/^{11}O$) and hydrogen ($^2H/^1H$) isotopes in $H_2O$ were measured using standard automated techniques on a Thermo Scientific Delta V mass spectrometer set at 25°C. Isotope data were produced using the method established by Nelson (2000) and are reported relative to international reference standard VSMOW with 1σ uncertainties of ± 0.3‰ for $\delta^{18}O$ and ± 3‰ for $\delta^2H$.

Calculations

*Re-equilibration of multi-phase samples*

As described above, the fluid samples obtained from extraction wells analysed in this study have multiple phases that need to be combined and re-equilibrated to attain the total extraction well discharge. The calculation required for re-equilibration is dependent on how noble gases, $CO_2$ and $H_2O$ partition between the three phases (water, steam, and non-condensable gas). This in turn is controlled by the temperature, pressure, and pH of phase separation, all of which are measured at the separator during sampling.

*Noble gases*

Noble gases are chemically inert and insoluble in water, meaning they preferentially partition into gaseous phases during phase separation. As noble gas measurements are taken from the non-condensable gas phase, we assume this phase is representative of the total well discharge and no re-equilibration is needed for these data.

*$CO_2/^3He$*

The partitioning of $CO_2$ between steam and water phases in the Carbfix monitoring wells is reported in the supplementary materials of Clark et al., (2020). They report -92% of $CO_2$ partitions into the steam phase and the remaining ~8% remains dissolved in the water phase.

We use this to calculate the partitioning of $CO_2$ and $^3He$ between steam and water phases, using dimensionless Henry's constants and the vapour-liquid distribution coefficients of Fernández-Prini et al., (2003) at the separation temperature (180°C) pressure (9 bar) and salinity (0.05 M/L). This indicates that >99% of $^3He$ partitions into the steam phase, as expected given the insolubility of noble gases, and as a result pre-separation $CO_2/^3He$ are within uncertainty limits of $CO_2/^3He$ measured in the non-condensable gas samples. Given this, we use these measured values as the equilibrated values for total well discharge.

*$CO_2$ and $H_2O$ isotopes*

Partitioning of the constituent isotopes of $CO_2$ and $H_2O$ between steam condensate and separated water phases can be corrected for to acquire total well isotope ratios using the following equation:

$$\boldsymbol{\delta_{td} == X_v \times \delta_v + (1 - X_v) \times \delta_l} \qquad \text{(Equation 4)}$$

where $\delta$ is the $\delta^{13}C_{CO2}$ $\delta^{18}O_{H2O}$ or $\delta^2H_{H2O}$ value of the total discharge (td), vapour phase (v) and liquid phase (*l*), and $X_v$ is the fraction of $CO_2$ or $H_2O$ present in the vapour phase. For $\delta^{13}C_{CO2}$, the vapour and liquid phases correspond to gaseous $CO_2$ measured in the non-condensable gas and DIC measured in the separated water. For $\delta^{18}O_{H2O}$ and $\delta^2H_{H2O}$ vapour and liquid phases correspond to the steam condensate and separated water samples. $CO_2$ $X_v$ is derived using the timeseries data of Clark et al., (2020). $H_2O$ $X_v$ is calculated using the measured wellhead enthalpy, pressure and separation temperature (Saby et al., 2020).

**Results**

Noble gas concentrations and ratios are reported in **Table 2.** GC (gas chromatography) $CO_2/^3H$, $CO_2$ and $H_2O$ isotope data are reported in **Table 3.**

<u>Noble gas ratios</u>

*$^3He/^4He$*

Air corrected $^3He/^4He$ ratios ($R_C/R_A$) range from 14.3 ($\pm$ 0.9) to 16.6 ($\pm$ 2.0). Hellisheiði and Hverahlíð production wells range between 14.9 ($\pm$ 0.8) and 16.6 ($\pm$ 2.0). Carbfix scrubbing tower gas outlet (14.8 $\pm$ 0.9) and inlet (14.3 $\pm$ 0.9) are within error of each other. v monitoring wells are also within uncertainty of each other, ranging from 14.7 ($\pm$ 0.8) in HE-33 to 15.9 ($\pm$ 0.9) in HE-48.

*$^4He/^{20}Ne$*

Measured $^4He/^{20}Ne$ ratios range from 2.8 ($\pm$ 0.1) to 34.6 ($\pm$ 1.8). Hellisheiði and Hverahlíð production wells range between 3.0 ($\pm$ 0.1) and 19.1 ($\pm$ 1.0). Carbfix scrubbing tower gas outlet (3.6 $\pm$ 0.2) is higher than the gas inlet (2.8 $\pm$ 0.1). Carbfix monitoring wells range from 25.6 ($\pm$ 1.1) in HE-48 to 34.6 ($\pm$ 1.8) in HE-44.

GC

Copper tube samples contained 59-95% $CO_2$. No $H_2S$ was not measured in any of the samples despite it being the second largest non-condensable gas by volume produced at Hellisheiði geothermal power plant. $H_2S$ rapidly reacts with the internal surface of the copper tubes once sealed during sampling, forming copper sulphate, and removing it from the gas mix. Although this alters individual gas percentage values, gas concentrations relative to each other remain the same, meaning ratios ($^3He/^4He$; $^4He/^{20}Ne$; $CO_2/^3He$) are unaffected.

$CO_2/^3He$

$CO_2/^3He$ varies by an order of magnitude from 1.4 x $10^9$ (± 1.1 x $10^8$) to 1.4 x $10^{10}$ (± 1.1 x $10^9$). Hellisheiði and Hverahlíð production wells range between 3.0 x $10^9$ (± 2.4 x $10^8$) to 6.9 x $10^9$ (± 5.8 x $10^8$). Carbfix scrubbing tower gas outlet (3.2 x $10^9$ ± 2.6 x $10^8$) is 50% lower than the gas inlet (6.4 x $10^9$ ± 5.1 x $10^8$). Carbfix monitoring wells range from 1.4 x $10^9$ (± 1.1 x $10^8$) in HE-44 to 2.0 x $10^9$ (± 1.6 x $10^8$) in HE-31.

Carbon isotope ratios

Results described below refer to equilibrated total discharge values, rather than $CO_{2(g)}$ or DIC data. All phases are reported in **Table 3.**

*$\delta^{13}C$*

$\delta^{13}C_{CO2}$ values range from -6.6‰ to -2.8‰ VPDB. Hellisheiði and Hverahlíð production wells range between -6.6‰ and -3.2‰. HE-60 (-6.6‰) is an outlier of the dataset, with the next lowest measured value being -3.9‰ in the Carbfix scrubbing tower gas inlet. The scrubbing tower gas outlet (-2.8‰) is higher than the gas inlet (-3.9‰). Carbfix monitoring wells range from -3.6‰ in HE-33 to -3.4‰ in HE-31.

Water isotope ratios

Results described below refer to equilibrated total discharge values, rather than steam condensate or separated water phases. All phases are reported in **Table 3.**

*$\delta^{18}O$*

$\delta^{18}O_{H2O}$ values range from -8.7‰ to -0.6‰ VSMOW. Hellisheiði and Hverahlíð production wells range between -8.3‰ and -6.9‰. Carbfix monitoring wells range from -8.6‰ in HE-33 to -7.6‰ in HE-48.

*$\delta^2H$*

$\delta^2H_{H2O}$ values range from -73.4‰ to -46.3‰ VSMOW. Hellisheiði and Hverahlíð production wells range between -73.4‰ and -64.9‰. Carbfix monitoring wells range from - 69.8‰ in HE-48 to -67.3‰ in HE-44.

Table 2: Concentrations and ratios of gases contained within non-condensable gas samples collected in copper tubes at Hellisheiði. Measured $^3He/^4He$ ratios ($R_M$) and atmosphere corrected ratios (Rc) are reported relative to atmosphere ($R_A$, = 1.4 x $10^{-6}$). Air correction is calculated using the method outlined in Füri et al., (2010) and Hilton et al., (1996). Uncertainties are one standard deviation (1σ).

| Samples | | | Noble gases ($cm^3/cm^3$ STP) | | | | | | Noble gas ratios | | | | | | | |
|---|---|---|---|---|---|---|---|---|---|---|---|---|---|---|---|---|
| System | Location | Sampling point | $^3He$ | ± d | $^4He$ | ± d | $^{20}Ne$ | ± d | $^3He/^4He$ ($R/R_A$) | ± d | $^4He/^{20}Ne$ | ± d | X | ± d | $R_C/R_A$ | ± d |
| Geothermal field | Hverahlíð | Fumarole | 6.2E-11 | 4.1E-12 | 3.2E-06 | 9.6E-08 | 9.1E-07 | 3.2E-08 | 13.8 | 0.5 | 3.5 | 0.2 | 13.9 | 0.6 | 14.8 | 0.9 |
| | | HE-54 | 1.8E-10 | 1.2E-11 | 7.8E-06 | 2.4E-07 | 5.4E-07 | 6.1E-08 | 16.4 | 0.6 | 14.4 | 1.7 | 56.8 | 6.6 | 16.6 | 2.0 |
| | | HE-60 | 8.5E-11 | 5.7E-12 | 4.5E-06 | 1.3E-07 | 1.5E-06 | 3.7E-08 | 13.8 | 0.5 | 3.0 | 0.1 | 11.8 | 0.5 | 14.9 | 0.8 |
| | Hellisheiði | HE-03 | 2.9E-10 | 1.9E-11 | 1.3E-05 | 4.0E-07 | 7.0E-07 | 2.9E-08 | 15.6 | 0.6 | 19.1 | 1.0 | 74.9 | 3.8 | 15.8 | 1.0 |
| | | HE-07 | 2.0E-10 | 1.4E-11 | 1.0E-05 | 3.0E-07 | 1.6E-06 | 6.8E-08 | 14.4 | 0.5 | 6.2 | 0.3 | 24.4 | 1.2 | 15.0 | 1.0 |
| Carbfix | Scrubbing tower gases | Inlet | 1.3E-10 | 8.5E-12 | 6.9E-06 | 2.1E-07 | 2.4E-06 | 9.9E-08 | 13.1 | 0.5 | 2.8 | 0.1 | 11.2 | 0.6 | 14.3 | 0.9 |
| | | Outlet | 2.3E-10 | 1.5E-11 | 1.2E-05 | 3.5E-07 | 3.3E-06 | 1.4E-07 | 13.8 | 0.5 | 3.6 | 0.2 | 14.0 | 0.7 | 14.8 | 0.9 |
| | Monitoring wells | HE-31 | 4.6E-10 | 3.3E-11 | 2.3E-05 | 6.7E-07 | 7.4E-07 | 3.7E-08 | 14.9 | 0.6 | 30.4 | 1.8 | 119.5 | 7.1 | 15.0 | 1.1 |
| | | HE-48 | 5.1E-10 | 3.4E-11 | 2.3E-05 | 6.9E-07 | 9.1E-07 | 2.7E-08 | 15.7 | 0.6 | 25.6 | 1.1 | 100.8 | 4.2 | 15.9 | 0.9 |
| | | HE-44 | 6.7E-10 | 4.6E-11 | 3.3E-05 | 9.7E-07 | 9.4E-07 | 3.9E-08 | 14.9 | 0.6 | 34.6 | 1.8 | 136.0 | 6.9 | 15.0 | 1.0 |
| | | HE-33 | 5.1E-10 | 3.4E-11 | 2.5E-05 | 7.5E-07 | 7.8E-07 | 2.2E-08 | 14.6 | 0.5 | 32.3 | 1.3 | 126.9 | 5.2 | 14.7 | 0.8 |

Table 3: Elemental abundances, $CO_2/^3He$ and stable isotope ratios measured in gas and water samples from Hellisheiði. GC and $CO_{2(g)}$ isotope measurements were taken from non-condensable gas samples collected in copper tubes. DIC isotope measurements were made separated water samples for production and monitoring wells. 'l/c' corresponds to low concentration of DIC which resulted in unreliable $\delta^{13}C$ data. $H_2O$ isotope measurements for wells were taken from separated water and steam condensate samples. The fractionation induced on $CO_2$ and $H_2O$ isotopes during the phase separation process is corrected for using Equation 3 to produce equilibrated (total) values. The fumarole and injection fluids samples only have one phase; therefore, they do not require re-equilibration. $1\sigma$ uncertainties for $\delta^{13}C$, $\delta^{18}O$ and $\delta^2H$ are 0.1‰, 0.3‰ and 3.0‰ respectively.

| Samples | | | GC (% volume) | | | | $CO_2/^3He$ | ± d | $CO_2$ | | | $H_2O$ | | | | | |
|---|---|---|---|---|---|---|---|---|---|---|---|---|---|---|---|---|---|
| | | | | | | | | | $\delta^{13}C$ (‰) VPDB | | | $\delta^{18}O$ (‰) VSMOW | | | δD (‰) VSMOW | | |
| System | Location | Sampling point | $CO_2$ | $H_2S$ | $N_2$ | $CH_4$ | | | $CO_{2(g)}$ | DIC | Total | Steam | Water | Total | Steam | Water | Total |
| Geothermal field | Hverahlíð | Fumarole | 87% | 0% | 13% | 0% | 1.4E+10 | 1.1E+09 | -3.7 | l/c | -3.7 | n/a | n/a | -0.6 | n/a | n/a | -46.3 |
| | | HE-54 | 95% | 0% | 5% | 0% | 5.4E+09 | 4.2E+08 | -3.2 | l/c | -3.2 | -8.6 | -6.7 | -8.0 | -73.8 | -72.7 | -73.4 |
| | | HE-60 | 59% | 0% | 41% | 1% | 6.9E+09 | 5.8E+08 | -6.6 | l/c | -6.6 | -8.4 | -6.3 | -8.3 | -71.0 | -67.7 | -70.8 |
| | Hellisheiði | HE-03 | 86% | 0% | 13% | 1% | 3.0E+09 | 2.4E+08 | -3.6 | l/c | -3.6 | -8.9 | -6.4 | -7.1 | -68.4 | -63.5 | -64.9 |
| | | HE-07 | 93% | 0% | 5% | 2% | 4.6E+09 | 3.6E+08 | -3.4 | l/c | -3.4 | -8.7 | -5.9 | -6.9 | -70.0 | -64.1 | -66.2 |
| Carbfix | Scrubbing tower gases | Inlet | 80% | 0% | 18% | 1% | 6.4E+09 | 5.1E+08 | -3.9 | n/a | n/a | n/a | n/a | n/a | n/a | n/a | n/a |
| | | Outlet | 73% | 0% | 27% | 1% | 3.2E+09 | 2.6E+08 | -2.8 | n/a | n/a | n/a | n/a | n/a | n/a | n/a | n/a |
| | Injection fluids | Separated water | n/a | n/a | n/a | n/a | n/a | n/a | n/a | l/c | n/a | n/a | -6.0 | n/a | n/a | -62.5 | n/a |
| | | Steam condensate | n/a | n/a | n/a | n/a | n/a | n/a | n/a | l/c | n/a | -8.7 | n/a | n/a | -67.5 | n/a | n/a |
| | Monitoring wells | HE-31 | 94% | 0% | 6% | 0% | 2.0E+09 | 1.6E+08 | -3.2 | -5.6 | -3.4 | -10.1 | -7.4 | -7.9 | -73.0 | -67.1 | -68.2 |
| | | HE-48 | 93% | 0% | 6% | 0% | 1.8E+09 | 1.4E+08 | -3.3 | -5.3 | -3.5 | -8.2 | -7.5 | -7.6 | -69.0 | -70.0 | -69.8 |
| | | HE-44 | 93% | 0% | 7% | 0% | 1.4E+09 | 1.1E+08 | -3.4 | -5.4 | -3.6 | -10.4 | -7.7 | -8.2 | -73.0 | -66.0 | -67.3 |
| | | HE-33 | 94% | 0% | 6% | 0% | 1.8E+09 | 1.4E+08 | -3.5 | -5.1 | -3.6 | -10.9 | -8.1 | -8.6 | -74.4 | -68.1 | -69.2 |

**Discussion**

Regional context of results

Noble gas, $CO_2$ and $H_2O$ isotope data collected from Hellisheiði geothermal field and power plant are all within ranges previously recorded in published literature for the WVZ of Iceland. They indicate a magmatic source of gases ($CO_2$ and He), meteoric source of fluids and varying extents of meteoric fluid mixing and gas-water-rock reactions.

*Noble gas ratios*

*$^3He/^4He$ and $^4He/^{20}Ne$ values* (see Table 2) fall within the range previously recorded for the western rift zone (WRZ) of Iceland (see **Figure 2)** (Harðardóttir et al., 2018) and are similar to previous data from Hengill (Füri et al., 2010). When plotted together with $^3He/^4He$, data indicate two-part mixing between a high and low $R/R_A$ and $^4He/^{20}Ne$ source. Meteoric fluids are the low source because they are equilibrated with atmospheric noble gases (e.g., $^{20}Ne$), and therefore have $R_A$ and $^4He/^{20}Ne$ values of 1 and 0.318 respectively (Benson and Krause, 1980; Smith and Kennedy, 1983; Ballentine and O'Nions, 1994; Saby et al., 2020).

We derive the high $R_A$ and $^4He/^{20}Ne$ source using an inverse mixing hyperbola calculation as described in Albarède, (1996) and Saby et al., (2020). This gives a local mantle value of 15.1 $R/R_A$ **(Figure 2),** which suggests mixing between an Icelandic plume (R/Ra, = >35) and depleted mid-ocean ridge (MORB) type mantle (DMM) source ($R/R_A$ = 8). The extent of mixing and dilution of magmatic and meteoric noble gases is likely dependent on the specific hydrogeology of a given well, as demonstrated by differing $R_A$ and $^4He/^{20}Ne$ values for wells from the same production area (HE-03 vs. HE-07 and HE-54 vs. HE-60 on **Figure 2).**

*$CO_2/^3He$*

$CO_2/^3He$ values (see **Table 2)** fall within the magmatic range of $10^9$ to $10^{10}$ (Marty and Jambon, 1987; Trull et al., 1993; Ballentine et al., 2001; Holland and Gilfillan, 2013) and overlap with previous data from Hengill (Barry et al., 2014). The Carbfix scrubbing tower gas inlet sample, which is an average $CO_2/^3He$ for Hellisheiði production wells, is within the uncertainty ranges of previously published averages for Hengill (5 x $10^9$) and the Icelandic plume (6 x $10^9$).

*$\delta^{13}C$*

$\delta^{13}C_{CO2}$ values also overlap with literature averages for Hengill (-4.1‰ VPDB) and the Icelandic plume (-3.8‰) (**Figure 3**). The Carbfix gas inlet (-3.9‰ $\pm$ 0.1 VPDB) is within measurement uncertainty of the plume average, and all data points plot within 1‰ of this average, apart from Hverahlíð production well HE-60.

*$H_2O$ isotopes*

Water isotope data overlap with previous results from Hellisheiði (Mutonga 2007). and are characterised by two trends: enrichment in $^{18}O$ relative to meteoric water and $\delta^{18}O$-$\delta^2H$ correlation that differs from the meteoric water lines (**Figure 4**).

*$^{18}O$ enrichment*

In high temperature geothermal systems such as Hellisheiði, isotope exchange occurs between reservoir fluids and oxygen-baring minerals in host rocks. Depending on the water-rock ratio, this can buffer $\delta^{18}O_{H2O}$ towards the rock value, with lower water-rock ratios resulting in larger shifts in $\delta^{18}O_{H2O}$. MORB basalts have average $\delta^{18}O$ values of ~+5‰ VSMOW, and analysis of rocks from Hellisheiði and the Hengill fissure swarm record similar values.

Waters in Hellisheiði geothermal reservoir will therefore become progressively enriched in $^{18}O$ over time as they are buffered towards the rock value of ~+5‰ VSMOW. The recent study of Wostbrock et al., (2018) used a triple oxygen isotope mixing model to calculate that production waters at Hellisheiði are 20% altered by high temperature oxygen isotope exchange with geothermal host rocks. This partially explains why data in this study record higher $\delta^{18}O_{H2O}$ values than local meteoric water.

*$\delta^{18}O$ and $\delta^2H$ correlation*

As well as higher $\delta^{18}O$ values than meteoric water, $H_2O$ isotope data show a clear positive correlation that differs from the global and local meteoric waters (see **Figure 4**). One of the causes of this trend is the fractionation of O and H

isotopes during separation of the single-phase geothermal fluid into steam and water phases. Heavier $^{18}O$ and $^{2}H$ are preferentially retained in the separated water phase, leading to lower steam condensate and higher separated water $\delta^{18}O$ and $\delta^{2}H$ values relative to the total discharge.

This means the difference in power plant steam condensate and separated water $\delta^{18}O$ and $\delta^{2}H$ values equates to the $\varepsilon_{water\text{-}stea}$ at the temperature of phase separation. We can back-calculate this difference using the equilibrium fractionation equations of Horita and Wesolowski (1994) to acquire the temperature of phase separation. $\delta^{18}O_{H2O}$ $\varepsilon_{water\text{-}ste}$ of 2.5‰ returns a separation temperature of 191-195°C, and $\delta^{2}H$ $\varepsilon_{water\text{-}stea}$ of 5.4‰ returns 187°C. Separation temperatures during sampling of the wells reported in this study varied from 176°C to 210°C, which encompasses the isotope-derived temperatures above.

An additional potential cause of $\delta^{18}O$ and $\delta^{2}H$ correlation is the mixing of differing fluid sources. Previous water isotope studies of Hellisheiði and sister geothermal field Nesjavellir concluded that the two fields do not share the same source of water, despite their positioning on either side of the Hengill volcanic centre. Hellisheiði was interpreted to be fed by local meteoric waters that were enriched in $^{2}H$ relative to the inland highland-sourced $^{2}H$-depleted waters that fed Nesjavellir. In these previous studies, it was also noted that certain wells on the periphery of Hellisheiði recorded lower $\delta^{2}H_{H2O}$, and it was suggested that this was caused by a mixing of local Hellisheiði meteoric water with the isotopically lighter fluids that feed Nesjavellir. We believe our results support this hypothesis.

Production wells HE-03 and HE-07 plot in a similar oxygen and hydrogen isotope space to the previous data of Mutonga (2007) (**Figure 4**), whereas Carbfix monitoring and Hverahlíð production wells are relatively depleted in $^{18}O$ and $^{2}H$. Carbfix monitoring wells are the most northerly production wells at Hellisheiði, meaning they are geographically the closest Hellisheiði wells to Nesjavellir. Given this, the monitoring wells are more likely than other production wells to record water isotope values similar to Nesjavellir data.

A linear regression of $H_2O$ isotope data in this study (excluding the power plant samples) intersects the meteoric water lines at a similar point to the source waters proposed for Nesjavellir (**Figure 4**). This suggests there is some mixing of Nesjavellir-type waters in certain wells, such as the Carbfix monitoring wells, as was previously proposed by. Ongoing $CO_2$ injection at Carbfix is not thought to contribute to $\delta^{18}O_{H2O}$ values because it comprises an insignificant portion of the overall oxygen isotope pool (<1%; Sigfússon et al., 2018).

<u>Carbfix scrubbing tower</u>

*<u>Quantifying $CO_2$ dissolution</u>*

The scrubbing tower has two inputs (gas inlet - geothermal gas) and pure condensate) and two outputs (gas outlet -remaining non-condensable gases) and gas-charged condensate), and operates at fixed conditions of 20°C and 6 bar. This means the tower is a closed geochemical system operating at controlled conditions, therefore changes between inputs and outputs will isotopically balance. We assume changes in $CO_2/^{3}He$ are indicative of $CO_2$ behaviour because $^{3}He$ is insoluble relative to $CO_2$ at tower conditions and the steam condensate is not a source of $^{3}He$. This means shifts in $CO_2/^{3}He$ between inlet and outlet samples can be used to calculate the fraction of $CO_2$ dissolved in the tower:

$$\%\, CO_2\ dissolved = 1 - \left(\frac{CO_2}{^{3}He_o} / \frac{CO_2}{^{3}He_i}\right) \quad \text{(Equation 5)}$$

where subscripts (i) and (*o*) are the measured $CO_2/^{3}He$ of the gas inlet and outlet respectively. This indicates 50% (± 4%) of $CO_2$ was dissolved in the scrubbing tower at the time of sampling, which is similar to the 56% dissolution reported in Gunnarsson et al., (2018) (no uncertainty range was reported).

*<u>Isotope fractionation</u>*

The fractionation factor ($\varepsilon$) for $\delta^{13}C_{CO2}$ during $CO_2$ dissolution can be calculated using the remaining fraction (f) of undissolved $CO_2$ and a rearranged version of the Rayleigh fractionation equation (Mariotti et al., 1981; Clark and Fritz, 1997; Hayes, 2004):

$$\varepsilon = \frac{(\delta_o - \delta_i)}{\ln f} \quad \text{(Equation 6)}$$

where $\delta$ is the carbon isotope value of $CO_2$. This results in a $\varepsilon_{CO2(aq)\text{-}CO2(g)}$ value of - 1.6‰ (± 0.2). Studies of Vogel et al., (1970) and Zhang et al., (1995) report equilibrium $\varepsilon_{CO2(aq)\text{-}CO2(g)}$ of -1.1‰ and -1.2‰ respectively for 20°C, suggesting more $^{12}C$ is being dissolved relative to $^{13}C$ in the Carbfix scrubbing tower than would be expected at equilibrium conditions.

Carbon isotope equilibrium between $CO_2$ and DIC is usually established within hours, therefore if dissolution is proceeding faster than this timescale in the scrubbing tower, this may explain the discrepancy between $CO_2/^3He$-derived $\varepsilon_{CO2(aq)-CO2(g)}$ of this study and literature equilibrium values (Myrttinen et al., 2015).

Calculating injectate values

*Dissolved gases*

We can use the shifts between gas inlet and outlet $CO_2/^3He$ and $\delta^{13}C_{CO2}$ to calculate values for the dissolved $CO_2$.

*$CO_2/^3He$*

Changes in $CO_2/^3He$ between the gas inlet and outlet (geothermal gas and gas-charged condensate) will mass balance with respect to the dissolved $CO_2$. As dissolution progresses, the $CO_2/^3He$ of dissolved $CO_2$ progressively increases and can be calculated using the following equation:

$$\frac{CO_2}{^3He}_d = \frac{CO_2}{^3He}_i \times (1 + (1 - f)) \qquad \text{(Equation 7)}$$

where subscript (d) is the calculated $CO_2/^3He$ of dissolved $CO_2$. This produces an estimated $CO_2/^3He$ ratio for dissolved $CO_2$ of 9.6 x $10^9$ ($\pm$ 8.9 x $10^8$) (Table 3 and Figure 5).

*$\delta^{13}C$*

Changes in $\delta^{13}C_{CO2}$ between gas inlet and outlet samples will also mass balance with respect to dissolved $CO_2$. For the tower system we use an isotope mass balance equation for an accumulated reaction product (Clark and Fritz, 1997):

$$\delta_d = \delta_o - \frac{\varepsilon_{CO_{2(aq)}-CO_{2(g)}} * \ln f}{(1-f)} \qquad \text{(Equation 8)}$$

where $\delta$ is the $\delta^{13}C$ of the dissolved (d) and gas outlet ($o$) $CO_2$, $\varepsilon_{CO2(aq)-CO2(g)}$ is the isotope fractionation factor calculated for $\delta^{13}C$ above, and f is the remaining undissolved $CO_2$. The estimated $\delta^{13}C_{CO2}$ value produced from this is -5.0‰ ($\pm$ 0.2‰) VPDB (Table 3 and Figure 5).

The accumulated product equation is used rather than the instantaneous equation because (1) gas charged condensate accumulates at the bottom of the scrubbing tower and (2) all dissolved $CO_2$ is injected into the Carbfix storage reservoir. This means on a reservoir scale the overall isotope value of injected dissolved $CO_2$ will equate to the accumulated product value. While this is likely a simplification of the true systematics of $CO_2$ dissolution in the Carbfix scrubbing tower, particularly from a single sample set such as in this study, we believe it the most representative isotope fractionation model for the Carbfix injectate.

*Injected fluids*

Injectate $\delta^{18}O$ and $\delta^2H$ values will be controlled by the mixing ratio between the gas charged condensate and co-injected separated water. Dissolution of $CO_2$ into steam condensate does not influence the $\delta^{18}O_{H2O}$ of the gas charged condensate because data from Sigfússon et al., (2018) indicate $CO_2$ constitutes <1% of the total overall oxygen isotope pool post-dissolution. As a result, the $\delta^{18}O$ and $\delta^2H$ of the Carbfix injectate can be calculated using a modified version of Equation 4:

$$\delta_{ci} = X_{gc} \times \delta_{gc} + (1 - X_{gc}) \times \delta_{sw} \qquad \text{(Equation 9)}$$

where $\delta$ is the $\delta^{18}O$ and $\delta^2H$ values of the Carbfix injectate (***ci***), gas-charged condensate (***gc)*** and re-injected separated water (***sw***), and $X_{gc}$ is the fraction of the injectate water that is sourced from the gas charged condensate (0.3; from Clark et al., 2018). This results in injectate $\delta^{18}O_{H2O}$ and $\delta^2H_{H2O}$ values of -6.8‰ ($\pm$ 0.4‰) and -64.0‰ ($\pm$ 4.2‰) VSMOW:

**Table 4: Summary of calculated Carbfix injectate isotope values**

| | $CO_2/^3He$ | $\delta^{13}C_{CO2}$ (‰) VPDB | $\delta^{18}O_{H2O}$ (‰) VSMOW | $\delta^{2}H_{H2O}$ (‰) VSMOW |
|---|---|---|---|---|
| Carbfix injectate | $9.6 \times 10^9$ ($\pm$ $8.9 \times 10^8$) | -5.0 ($\pm$ 0.2) | -6.8 ($\pm$ 0.4) | -64.0 ($\pm$ 4.2) |

Carbfix $CO_2$ mineral storage reservoir

We now compare the injectate values calculated above to measured data in Carbfix monitoring wells HE-31, HE-48, HE-44, and HE-33 to evaluate the fate of injected $CO_2$ in the storage reservoir. The key difference between the Carbfix scrubbing tower and mineralisation reservoir systems is the presence of background fluids and $CO_2$. The majority of fluids and gases produced in the monitoring wells are background and do not originate from the Carbfix injection (see **Table 1**). This means injectate signals and any mineralisation-related isotope shifts will only be seen in monitoring wells if these values are distinct from background, even after they are diluted by mixing. This is particularly relevant for mineralisation effects because as $CO_2$ is removed the remaining fractionated $CO_2$ comprises an ever-smaller portion of the monitored DIC pool, thus increasingly the likelihood of overprinting from background signals.

*Baseline scenario: injectate-background mixing with no mineralisation*

It is first sensible to assess the shifts that would be expected in monitoring well isotope values if no mineralisation occurred in the reservoir and wells produced an injectate-background mix only. Previous non-reactive tracer testing of background fluid mixing in the Carbfix reservoir informs us on the likely proportion of injectate and background fluids in each monitoring well (**Table 1**). These data were acquired four years prior to our sampling campaign, so the use of these data assumes background mixing ratios have remained stable through time.

To model injectate-background mixing we also need isotope values for background fluids in the reservoir. Ideally this would be provided from pre-injection baseline data, but we do not have such a dataset. In the absence of this, we use data measured in HE-33 as the geochemical fingerprint of background fluids and $CO_2$ in the Carbfix reservoir. HE-33 recovered <3% of the tracers injected in the 2014 tests (**Table 1**), meaning it is >97% background fluids. The use of HE-33 as background assumes that all monitoring wells share isotopically similar background fluids and $CO_2$.

According to **Table 3,** monitoring well HE-33 has a $\delta^{13}C_{CO2}$ (‰) VPDB of -3.6. Thus, the background level of $\delta^{13}C_{CO2}$ (‰) VPDB in the geothermal reservoir is -3.6. According to table 4, the injectate level of $\delta^{13}C_{CO2}$ (‰) VPDB is -5 and the injectate $CO_2/^3He$ ratio is $9.6 \times 10^9$.

Using these data, as well as the background mixing ratios of **Table 1** and the DIC concentrations of the Carbfix injectate (50.6 mM; Clark et al., 2020) and background DIC (8.36 mM; Gunnarsson et al., 2018), we can predict an expected $\delta^{13}C_{CO2}$ (‰) VPDB and $CO_2/^3He$ ratio for HE-33, HE-48 and HE-44 and model a baseline scenario of binary mixing between the injectate and background fluids where no mineralisation occurs (**Figure 6A and Table 5**). If no mineralisation has occurred, $\delta^{13}C_{CO2}$ (‰) VPDB measured at the monitoring wells HE-31, HE-48 and HE-44 should be around the expected levels shown in **Table 5** and the $CO_2/^3He$ ratio measured at the monitoring wells HE-31, HE-48 and HE-44 should be around the expected levels shown in **Table 5.**

Furthermore, the $CO_2$ $\delta^{13}C$ (‰) VPDB and $CO_2/^3He$ measured at the monitoring wells HE-31, HE-48 and HE-44 should plot on the mixing line between the Carbfix injectate and background $CO_2$ on their respective mixing ratios (**Figure 6A**). Note that despite monitoring wells HE-31 and HE-48 producing 75% and 77% background respectively, $CO_2/^3He$ and $\delta^{13}C_{CO2}$ are still significantly shifted towards Carbfix injectate signals. This is because DIC in the injectate is approximately six times more concentrated than background fluids (50.6 mM vs. 8.36 mM).

Monitoring wells do not plot on this binary mixing line, instead recording lower $CO_2/^3He$ and higher $\delta^{13}C_{CO2}$ than expected for this baseline scenario (Table 5). This divergence is highest in the wells closest to the Carbfix injection well that receive the highest percentage of injectate relative to background (HE-31 and HE-48).

**Table 5:** Comparison between expected and measured $CO_2/^3He$ and $\delta^{13}C_{CO2}$ values in Carbfix monitoring wells. Expected values correspond to $CO_2/^3He$ and $\delta^{13}C_{CO2}$ data predicted for monitoring wells if no modification (i.e., no mineralisation) of $CO_2$ occurs in the Carbfix reservoir, meaning each well would produce a Carbfix injectate-background $CO_2$ mix equivalent to its respective background mixing ratio.

| | **Background mixing ratio** | **$CO_2/^3He$** | | | **$\delta^{13}C_{CO2}$ (‰ VPDB)** | | |
|---|---|---|---|---|---|---|---|
| | | Expecte d | Measure d | **Differenc e** | Expecte d | Measure d | **Differenc e** |
| **HE-31** | 75% | $7.0 \times 10^9$ | $2.0 \times 10^9$ | **$-5.0 \times 10^9$** | -4.5 | -3.4 | +1.1 |
| **HE-48** | 77% | $6.8 \times 10^9$ | $1.8 \times 10^9$ | **$-5.0 \times 10^9$** | -4.5 | -3.5 | +1.0 |

(continued)

| | Background mixing ratio | $CO_2/^3He$ | | | $\delta^{13}C_{CO2}$ (‰ VPDB) | | |
|---|---|---|---|---|---|---|---|
| | | Expecte d | Measure d | **Differenc e** | Expecte d | Measure d | **Differenc e** |
| **HE-44** | 90% | $5.0 \times 10^9$ | $1.4 \times 10^9$ | **$-3.6 \times 10^9$** | -4.1 | -3.6 | +0.5 |

*Modelling mineralisation*

Loss of $CO_2$ relative to inert $^3He$ in the Carbfix reservoir compared to expected values for injectate-background mixing suggests there is a $CO_2$ removal mechanism active in the reservoir that is most prevalent between injection well HN-16 and closest monitoring well HE-31. Microbial activity is not expected to be an active mechanism of $CO_2$ removal given the reservoir temperature of 265°C. Importantly, $CO_2$ mineralisation above 193°C enriches remaining residual $CO_2$ in $^{13}C$ relative to $^{12}C$, increasing $\delta^{13}C_{CO2}$ (Bottinga, 1969; Ohmoto and Rye, 1979; Clark and Fritz, 1997). Measured monitoring well $\delta^{13}C_{CO2}$ values are higher than expected for the baseline scenario of injectate-background mixing only (**Figure 6A and Table 5**), suggesting mineralisation is a plausible cause of $CO_2$ loss in the reservoir.

*Chronology with mixing*

We can model the expected evolution of injectate isotope values if mineralisation is occurring at the reservoir temperature of 265°C (**Figure 6B**). Timing of mineralisation relative to background fluid mixing (i.e., before, during or after) is important, because this impacts the starting isotope values prior to any mineralisation-induced fractionation, and the extent of any syn-or-post-mineralisation dilution from background values.

There are two end-member scenarios for the chronology of mineralisation and mixing: (1) all mineralisation occurs before any mixing, or (2) all mixing occurs before any mineralisation. In reality, both likely proceed simultaneously along the flow paths between injection and monitoring wells. Observations and modelling from other Carbfix projects indicated that scenario (1) is a better depiction of reality than scenario (2) (Snæbjörnsdóttir et al., 2018a; Clark et al., 2020; Marieni et al., 2021; Galeczka et al., 2022). With this in mind, we model two mineralisation-mixing chronologies; one where all mineralisation occurs before any background mixing (blue line; **Figure 6B**) and another where mineralisation and mixing progress simultaneously (green line; **Figure 6B**).

Mineralisation is modelled by assuming there is no $^3He$ loss during mineralisation, meaning changes in $CO_2/^3He$ are indicative of $CO_2$ behaviour and background mixing. Evolution of $\delta^{13}C_{CO2}$ is predicted using an open system model of Rayleigh fractionation, on the premise that once $CO_2$ is removed by mineralisation, it is unable to contribute to subsequent reactions:

$$\delta^{13}C_r = \delta^{13}C_{ci} + \varepsilon_{CaCO_3-CO_2} \times \ln f \qquad \text{(Equation 10)}$$

where subscripts (*r*) and (*ci*) are the carbon isotope value of the remaining and Carbfix injectate $CO_2$ respectively, $\varepsilon_{CaCO_3-CO_2}$ is the temperature dependent carbon isotope enrichment factor when $CO_2$ mineralises as calcite (1.55 at 265°C; Ohmoto and Rye 1979), and *f* is the fraction of the Carbfix injectate $CO_2$ that remains.

Fractionated injectate $CO_2$ (blue line; **Figure** 6B) will be diluted towards background $CO_2$ after mineralisation (i.e., shift from the blue line on **Figure 6B** towards HE-33). For simultaneous mineralisation and mixing, 10% is mineralised, followed by 10% mixing with background fluids. The resulting $\delta^{13}C_{CO2}$ value is calculated based on how much the remaining injectate $CO_2$ comprises of the overall $CO_2$ pool after 10% has been removed. This results in an evolution of $\delta^{13}C$ values that are initially similar to the mineralisation only scenario, but begin to mix back towards background values (HE-33) as $CO_2$ is mineralised and lost from the remaining mix (**Figure 6B**).

*Outputs*

Modelled simultaneous mineralisation and mixing in the Carbfix reservoir intersects the measured monitoring well values for HE-31 and HE-48 (**Figure 6B**). However, uncertainty ranges for monitoring wells HE-31, HE-48 and HE-44 overlap with background (HE-33), meaning these data are not conclusive about the fate of $CO_2$ in the reservoir because monitoring wells could be producing background $CO_2$ only. To test this, $CO_2$ tracers must be combined with a parameter that has a distinct background from the Carbfix injectate and is unaffected by reactions in the reservoir.

*Using $\delta^{18}O_{H2O}$ as a non-reactive tracer*

As has previously been discussed, $CO_2$ constitutes <1% of the overall oxygen isotope pool in the gas charged condensate. This is most concentrated source of dissolved $CO_2$ across the whole Carbfix system, meaning $CO_2$ comprises an even smaller portion of the oxygen isotope pool in reservoir and production fluids. The key implication of this is $\delta^{18}O_{H2O}$ values are unaffected by $CO_2$ and instead track fluid mixing. The Carbfix injectate $\delta^{18}O_{H2O}$ is 1.5‰ higher than background $\delta^{18}O_{H2O}$ in HE-33 (**Table 3 and 4**). Monitoring wells should therefore record $\delta^{18}O_{H2O}$ values that correspond to an injectate-background $\delta^{18}O$ mix proportional to their respective background mixing ratios (**Table 1**).

In this capacity, $\delta^{18}O_{H2O}$ data are in effect serving the same purpose as added non-reactive tracers previously used at Hellisheiði (Kristjansson et al., 2016; Ratouis et al., 2022) and in CarbFix projects (Matter et al., 2014, 2016; Gunnarsson et al., 2018; Clark et al., 2020). By combining these data with $\delta^{13}C_{CO2}$ values, we can assess the fate of $CO_2$ using the fractionation of carbon isotopes (**Figure 6**), and then use $\delta^{18}O_{H2O}$ data to determine if monitoring wells are producing injectate-background mixes or background only. As with $CO_2/^3He$ data, if no mineralisation is occurring in the reservoir, Carbfix monitoring wells should plot on an injectate-background mixing line (**Figure 7A**). Once again this is not the case, with monitoring wells instead recording $\delta^{13}C_{CO2}$ values higher than predicted for the baseline scenario.

Critically, $\delta^{18}O_{H2O}$ values of monitoring wells HE-31 and HE-48 are distinct from background (HE-33) and trend back towards the Carbfix injectate value, indicating the presence of injectate fluids in the monitoring wells. Modelled simultaneous mineralisation and mixing (green line; **Figure 7B**) produces a trend that intersects with measured monitoring well values. Projection of a monitoring well dataset regression line ($R^2 = 0.72$) indicates a $\delta^{13}C$-derived $CO_2$ mineralisation yield of -70% from these data.

Significance and implications

Shifts in $CO_2/^3He$, $\delta^{13}C_{CO2}$ and $\delta^{18}O_{H2O}$ values across the Carbfix scrubbing tower and storage reservoir systems correspond to comparable percentages of $CO_2$ dissolution (in scrubbing tower) and mineralisation (in storage reservoir) previously published (Gunnarsson et al., 2018; Clark et al., 2020). Enrichment of $^{13}C$ in Carbfix scrubbing tower gas outlet (**Figure 5**) and reservoir monitoring well samples (**Figure 6** and **Figure 7**) is particularly significant because this is directly and uniquely attributable to dissolution and mineralisation reactions.

This is encouraging for the wider application of inherent isotope tracers to the monitoring and verification of in-situ $CO_2$ mineralisation because there are specific characteristics of this Carbfix project that limit the effectiveness of inherent tracers in quantifying mineralisation. These characteristics are not shared by the majority of currently proposed in-situ $CO_2$ mineralisation projects, meaning verification using inherent tracers should be more effective at future projects.

$CO_2$ injected at Carbfix originates from the same geothermal reservoir it is being reinjected back into. Although $CO_2$ dissolution in the Carbfix scrubbing tower does deplete injected $CO_2$ in $^{13}C$ relative to the majority of produced $CO_2$ at Hellisheiði, it is still within 1-2‰ of background $CO_2$ $\delta^{13}C$. In addition, because the storage reservoir temperature is ~265°C, the $\varepsilon_{CaCO3\text{-}CO2}$ and the associated shifts in $\delta^{13}C_{CO2}$ resulting from mineralisation are relatively small compared to most carbonate forming environments in the shallow subsurface. Each of these factors individually, but particularly when combined, increase the risk of mineralisation related signals interfering with background values. This lack of distinction is critical for the effectiveness of inherent isotope tracers, as we see in **Figure 6,** and as discussed in the review of Mayer et al., (2015) regarding the use of $CO_2$ isotope ratios as a leakage detection tool at $CO_2$ storage sites.

The majority of in-situ $CO_2$ mineralisation projects currently proposed will inject $CO_2$ supplied from direct air capture (DAC; i.e., the atmosphere) or industrial processes (i.e., combustion of fossil fuels) into storage reservoirs with temperatures of <100°C. This means injected $CO_2$ will have a lower starting $\delta^{13}C$ value, and mineralisation will shift $\delta^{13}C_{CO2}$ by a larger extent than we observed in the higher temperature Carbfix reservoir. Atmospheric $CO_2$ has a $\delta^{13}C$ of -8.4‰ VPDB, whereas industrial sourced $CO_2$ can have $\delta^{13}C_{CO2}$ >20‰ lower than this.

*DAC example*

Taking the Orca DAC project in Iceland as an example, it captures and injects 4000t/year of atmospheric $CO_2$ for storage via in-situ $CO_2$ mineralisation in a basaltic reservoir that is 35-65°C. The fractionation effect(s), or lack of, from DAC technology on $CO_2$ and noble gas isotopes have yet to be established. Previous work investigating the fractionation effects of point source $CO_2$ capture technologies such as amine capture indicated that $^{13}C$ depletions of up to ~20‰ were evident (Flude et al., 2016, 2017). $\varepsilon_{CO2\text{-}CaCO3}$ at 100°C is -4.0‰ and decreases to -10.7%o at 20°C (Ohmoto and Rye, 1979).

If we assume the $CO_2$ capture and vaporisation process does not significantly alter $\delta^{13}C_{CO2}$, injected $CO_2$ will have a $\delta^{13}C$ value of atmospheric $CO_2$ (-8.4‰ VPDB; Graven et al., 2020). $\varepsilon_{CaCO3\text{-}CO2}$ for the Orca reservoir temperature range of 35-65°C is 9.2-6.5‰ (Ohmoto and Rye, 1979). Inputting these figures into the open system Rayleigh fractionation equation (Equation 10),, we can predict the $\delta^{13}C$ evolution of injected Orca $CO_2$ (see **Table 6**).

The extent to which this shift in $\delta^{13}C_{CO2}$ is recorded in monitoring well(s) will depend on the relative concentra-

tions of injected fractionated $CO_2$ and un-fractionated background $CO_2$, just as we have shown with the Carbfix data. Groundwater sourced DIC in Iceland is reported to have a $\delta^{13}C_{CO2}$ value of -12.5‰ (Stefánsson et al., 2016), and mineral sourced DIC is generally cited as higher than this (Sveinbjörnsdóttir et al., 1995). This means that once mineralisation progresses beyond 50%, the remaining injected DAC $CO_2$ should be distinctly depleted in $^{13}C$ relative to background sources of $CO_2$ (**Table 6**), making detection more likely.

**Table 6:** Predicted evolution of $CO_2$ injected at the Orca DAC project in Iceland at the minimum and maximum storage reservoir temperature, assuming a starting $\delta^{13}C$ of atmospheric $CO_2$ (Graven et al., 2020) and open system Rayleigh fractionation. Note this evolution does not include the dilution effects of $CO_2$ loss and mixing with background DIC present in the reservoir.

| Percentage $CO_2$ mineralised | Remaining $CO_2$ $\delta^{13}C$ (‰) VPDB | |
|---|---|---|
| | 35°C | 65°C |
| 0% | -8.4 | -8.4 |
| 10% | -9.4 | -9.1 |
| 20% | -10.5 | -9.9 |
| 30% | -11.7 | -10.7 |
| 40% | -13.1 | -11.7 |
| 50% | -14.8 | -12.9 |
| 60% | -16.8 | -14.4 |
| 70% | -19.5 | -16.2 |
| 80% | -23.2 | -18.9 |
| 90% | -29.6 | -23.4 |
| 99% | -50.8 | -38.3 |

To summarise, the larger the (1) distinction between injected and background $\delta^{13}C$ $CO_2$, (2) $\varepsilon_{CaCO3\text{-}CO_2}$ and (3) concentration and/or proportion of injected $CO_2$ in monitoring well(s) relative to background, the greater the potential for accurate quantification of in-situ $CO_2$ mineralisation.

*Using $\delta^{18}O_{H2O}$ as a non-reactive tracer*

As previously discussed, $\delta^{18}O_{H2O}$ data at Carbfix are not impacted by $CO_2$ because of the dominance of $H_2O$ in the oxygen isotope pool. This allows us to identify the presence of Carbfix injectate fluids in the monitoring wells despite the loss of $CO_2$ and carbon baring tracers through mineralisation. Given that large volumes of water are required for in-situ $CO_2$ mineralisation, we propose that current and future mineralisation projects could also use $\delta^{18}O_{H2O}$ values of injection fluids as a non-reactive tracer. These data could be compared to reactive tracers for determining mineralisation yields (Matter et al., 2014) and tracking fluid mixing.

Injectate-background $\delta^{18}O_{H2O}$ difference in this study was 1.5‰. Project operators could select injection waters that are particularly enriched or depleted in $^{18}O$ to provide the largest distinction feasible from background fluids. Assuming a source of these fluids exists, this would be a relatively inexpensive means of tracking $CO_2$ fate and fluid mixing because tracing would be provided from the inherent chemistry of the injectate.

**Conclusion**

In this study we assess the capability of inherent noble gas (in the form of $^3He$), $CO_2$ and $H_2O$ isotopes to monitor and verify in-situ $CO_2$ mineralisation at a Carbfix CCS project in Iceland.

We first report measurements from across the host geothermal field, Hellisheiði, to identify the performance of tracers in identifying the source and mixing extent of fluids, and the prevalence of gas-water-rock reactions. Noble gas ratios identify two-part mixing between magmatic and atmospheric noble gases, while $CO_2/^3He$ and $\delta^{13}C_{CO2}$ indicate a magmatic source of $CO_2$ as expected. $H_2O$ isotope ratios suggest source meteoric waters are modified by a combination of high temperature water-rock interaction and water-steam phase separation during geothermal production.

Results of measurements from the Carbfix scrubbing tower show reductions in $CO_2/^3He$ between gas inlet and outlet (geothermal gas and gas-charged condensate) samples that correspond to 50% ($\pm$ 4%) $CO_2$ dissolution. This is

comparable to the previously reported 56% dissolution of Gunnarsson et al., (2018). From these data we calculate that the $CO_2/^3He$ ratio and $\delta^{13}C_{CO2}$ of dissolved $CO_2$ are $9.6 \times 10^9$ ($\pm$ $8.9 \times 10^8$) and -5.0‰ ($\pm$ 0.2‰) VPDB respectively.

Comparison of these estimated injectate values with measured Carbfix monitoring well isotope data indicates that $CO_2/^3He$ is lower and $\delta^{13}C_{CO2}$ is higher than expected in monitoring wells for a baseline scenario where no mineralisation occurs. Given this, we model the evolution of injectate $CO_2/^3He$ and $\delta^{13}C_{CO2}$ for different chronologies of mineralisation and mixing at the reservoir temperature of 265°C. Monitoring well data intersect modelled mineralisation scenarios at similar extents of mineralisation previously recorded (Clark et al., 2020). $\delta^{18}O_{H2O}$ data are key for distinguishing between the remaining injectate and background COz in monitoring wells because the combined effects of fractionation and COz loss make injectate and background $CO_2/^3He$ and $\delta^{13}C$ indistinguishable.

We believe these results are promising for the wider application of inherent isotope tracers to the monitoring and verification of in-situ COz mineralisation. Most projects plan to inject isotopically distinct $CO_2$ into lower temperature storage reservoirs, which will increase the distinction between background and injected fractionated COz. Using the inherent chemistry of injected $CO_2$ and $H_2O$ to verify storage avoids the additional costs of added tracers and can provide direct evidence of mineralisation that is uniquely attributable to these reactions. Our findings are therefore of particular interest to the growing number of carbon dioxide removal (CDR) technologies such as DAC that are targeting durable geological storage.

It will be understood that the present embodiments are provided by way of example only, and that various modifications can be made to the present embodiments without departing from the scope of the invention.

## Claims

**1.** A method for monitoring mineralisation of carbon dioxide ($CO_2$) injected into a geological reservoir, the method comprising:

providing a system comprising:

an injection well for injecting fluid into the geological reservoir, and
an extraction well arranged a predetermined distance from the injection well, for extracting fluid samples from the geological reservoir,

performing a tracer test, in order to:

establish that a flow path exists between the injection well and the extraction well, and
characterize the flow path by:

determining/estimating a period of time it takes a fluid, injected through the injection well into the geological reservoir, to reach the extraction well,
determining/estimating a mixing ratio of background reservoir fluid and injected fluid at the extraction well,

obtaining background reservoir fluid data including an estimated $^{13}C/^{12}C$ ratio of COz in the background reservoir fluid at the extraction well and/or an estimated COz to noble gas ratio in the background reservoir fluid at the extraction well,
providing an injectate comprising water, $CO_2$ and noble gas,
performing first measurements on the injectate or on a plurality of fluids which has been merged to form the injectate, in order to estimate a $^{13}C/^{12}C$ ratio of $CO_2$ in the injectate and/or to estimate a COz to noble gas ratio in the injectate,
injecting the injectate into the geological reservoir through the injection well,
extracting a mixed fluid sample from the extraction well after the period of time has passed, the mixed fluid sample comprising a mixture of background reservoir fluid and injectate fluid,
performing second measurements on the mixed fluid sample, in order to estimate a $^{13}C/^{12}C$ ratio of $CO_2$ of the mixed fluid at the extraction well and/or to estimate a $CO_2$ to noble gas ratio of the mixed fluid at the extraction well,
calculating the expected $^{13}C/^{12}C$ ratio of $CO_2$ and/or the expected $CO_2$ to noble gas ratio of the mixed fluid at the extraction well if no mineralisation of CO2 has occurred between the injection well and the extraction well, based on the estimated mixing ratio at the extraction well, the background reservoir fluid data and the estimated $^{13}C/^{12}C$ ratio of COz in the injectate and/or the estimated COz to noble gas ratio in the injectate,
comparing the expected $^{13}C/^{12}C$ ratio of $CO_2$ and/or the expected $CO_2$ to noble gas ratio of the mixed fluid at the

extraction well with the estimated $^{13}C/^{12}C$ ratio of COz and/or estimated COz to noble gas ratio in the mixed fluid at the extraction well, respectively, in order to determine if mineralisation has occurred between the injection well and the extraction well and thereby monitor the mineralisation of carbon dioxide injected into the geological reservoir.

**2.** A method according to claim 1, wherein the method further includes determining/measuring the temperature in the flow path between the injection well and the extraction well and wherein the expected $^{13}C/^{12}C$ ratio of $CO_2$ is also based on the temperature in the flow path.

**3.** A method according to claims 1 or 2, wherein the injectate has a $^{18}O/^{16}O$ ratio of water, which is distinct from the $^{18}O/^{16}O$ ratio of water in the background reservoir fluid.

**4.** A method according to any of the preceding claims, wherein the background reservoir fluid data further includes an estimated $^{18}O/^{16}O$ ratio of water in the background reservoir fluid at the extraction well and wherein performing the first measurements and the second measurements further comprises estimating the $^{18}O/^{16}O$ ratio of water in the injectate and in the mixed fluid at the extraction well, respectively.

**5.** A method according to any of the preceding claims, wherein the background reservoir fluid data is obtained by:
extracting a background fluid sample consisting of background reservoir fluid from the geological reservoir, preferably from the extraction well, and performing background measurements on the background fluid sample, in order to estimate the $^{13}C/^{12}C$ ratio of COz in the background reservoir fluid and/or in order to estimate the $CO_2$ to noble gas ratio in the background reservoir fluid and/or the background $^{18}O/^{16}O$ ratio of water in the background reservoir fluid.

**6.** A method according to any of the preceding claims, wherein the tracer test comprises:

injecting a fluid comprising a known concentration of tracer into the geological reservoir through the injection well, extracting a plurality of fluid samples from the extraction well at different times and measuring the concentration of tracer in the extracted fluid samples, until tracer is detected in a fluid sample.

**7.** A method according to any of the preceding claims, wherein the period of time it takes a fluid, injected through the injection well into the geological reservoir, to reach the extraction well, is determined when the tracer is detected for the first time in a fluid sample,

**8.** A method according to any of the preceding claims, wherein the estimated mixing ratio of background reservoir fluid and injectate at the extraction well is determined by:

injecting a tracer fluid with a known concentration of tracer into the geological reservoir and, after a period of time, extracting a fluid sample from the extraction well comprising the tracer,
measuring the concentration of tracer in the extracted fluid sample, and
comparing the concentration of tracer in the tracer fluid with the concentration of tracer in the extracted fluid sample.

**9.** A method according to any of the preceding claims, wherein the tracer is a non-reactive tracer, preferably a tracer which is not found in the background reservoir fluid, such as an artificial tracer.

**10.** A method according to any of the preceding claims, wherein performing the first measurements includes performing direct or indirect measurement which can be used to estimate the total amount of $^{12}C$ and $^{13}C$ of $CO_2$ and/or the total amount of $CO_2$ and noble gas and/or the total amount of $^{18}O$ and $^{16}O$ of water in the injectate or in one or more of the plurality of fluids which has been merged to form the injectate.

**11.** A method according to any of the preceding claims, wherein the extracted fluid sample is separated into different phases, before performing the second measurements on the extracted fluid sample,
wherein performing the second measurements includes performing direct or indirect measurement which can be used to estimate the total amount of $^{12}C$ and $^{13}C$ of COz and/or the total amount of COz and noble gas and/or the total amount of $^{18}O$ and $^{16}O$ of water in the mixed fluid at the extraction well.

**12.** A method according to any of the preceding claims, wherein

the total amount of $CO_2$ includes $CO_{2(g)}$ and/or dissolved inorganic carbon (DIC) comprising $CO_{2\ (aq)}$ $H_2CO_3$, $HCO_3^-$, $CO_3^{2-}$, and
the total amount of $^{12}C$ and $^{13}C$ of $CO_2$ includes $CO_{2(g)}$ and/or dissolved inorganic carbon (DIC) comprising $CO_{2\ (aq)}$ $H_2CO_3$, $HCO_3^-$, $CO_3^{2-}$, and
the total amount of noble gas consist of noble $gas_{(g)}$, and
the total amount of $^{18}O$ and $^{16}O$ of water does not include $^{18}O$ and $^{16}O$ of $CO_2$.

**13.** A method according to any of the preceding claims, wherein performing the first measurements and/or the second measurements includes using mass spectroscopy and/or gas chromatography.

**14.** A method according to any of the preceding claims, wherein the injectate is provided by merging a plurality of fluids including a first fluid, a second fluid and third fluid at controlled ratios, wherein first fluid is a steam condensate obtained from a geothermal power plant, the second fluid is a gas stream comprising non-condensable gases obtained from the geothermal power plant and the third fluid is separated water, such as brine, obtained from the geothermal power plant.

**15.** A method according to any of the preceding claims, wherein the geological reservoir comprises or is a subterranean formation, such as a basaltic rock formation and/or a mafic or ultramafic rock formation and wherein the geological reservoir comprises a network of flow paths comprising a background reservoir fluid.

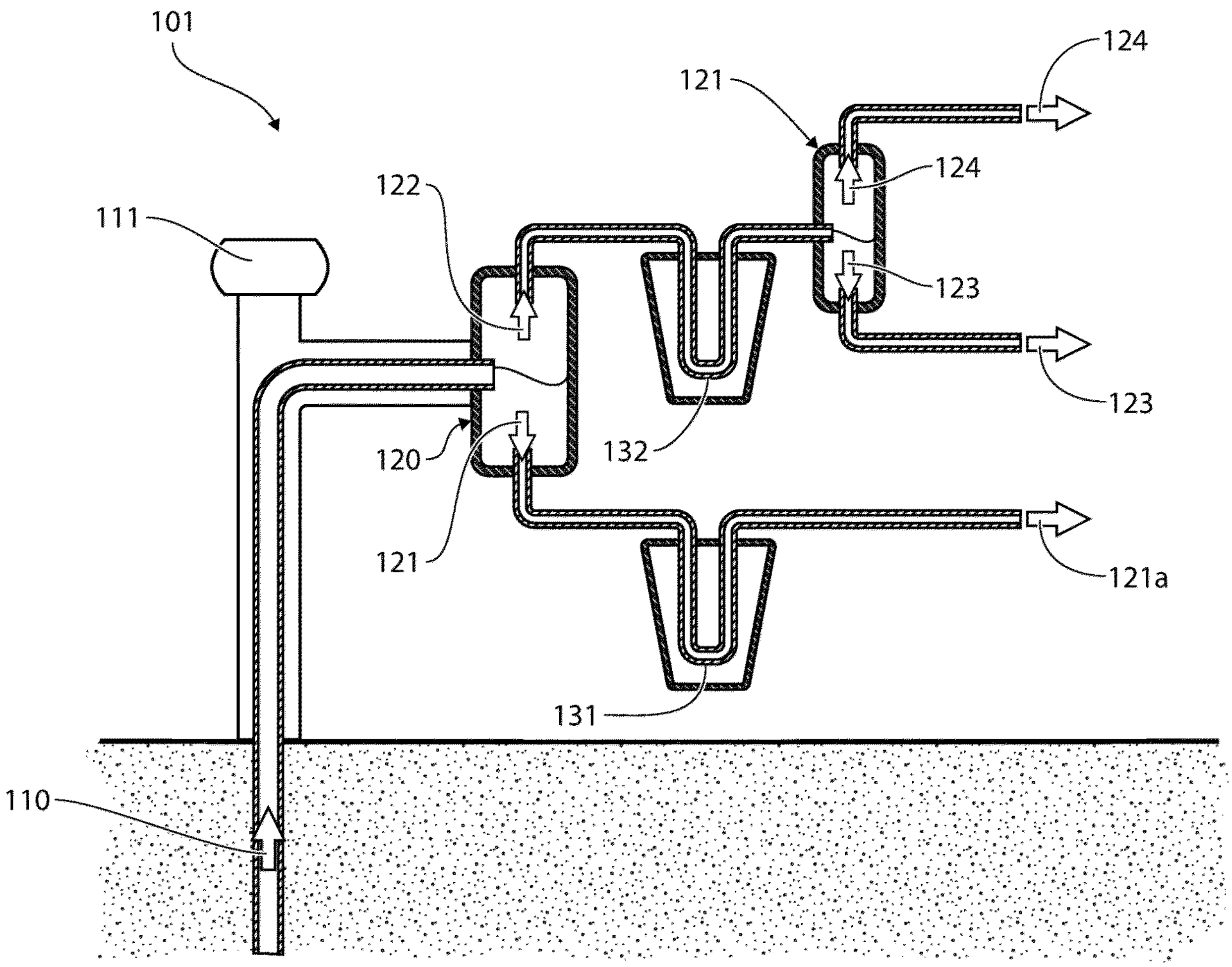


Figure 1

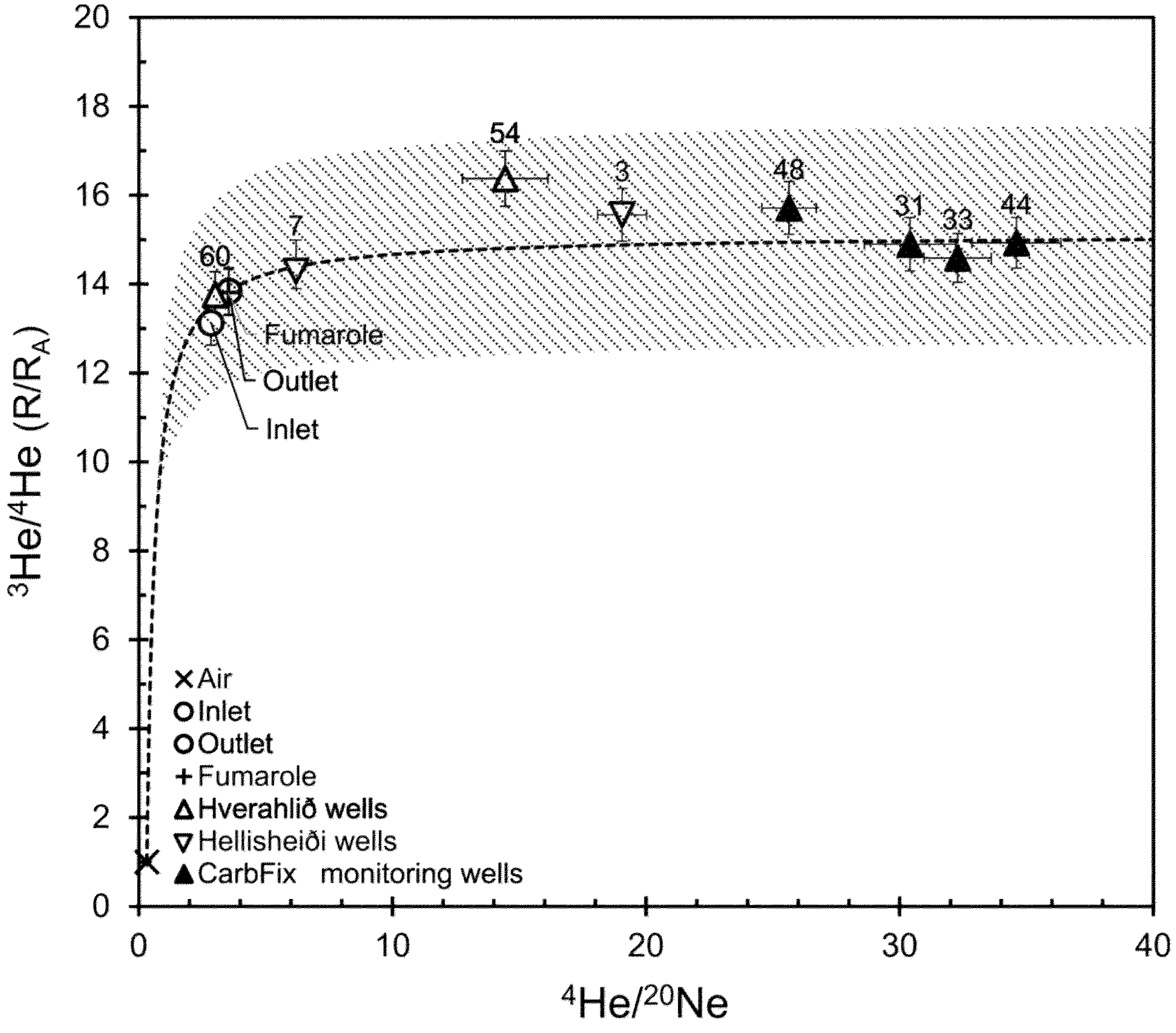
20
18
16
14
12
10
8
6
4
2
0
0
10
20
30
40
$^3He/^4He$ ($R/R_A$)
$^4He/^{20}Ne$
54
3
48
7
31
33
44
60
Fumarole
Outlet
Inlet
Air
Inlet
Outlet
Fumarole
Hverahlið wells
Hellisheiði wells
CarbFix monitoring wells

Figure 2

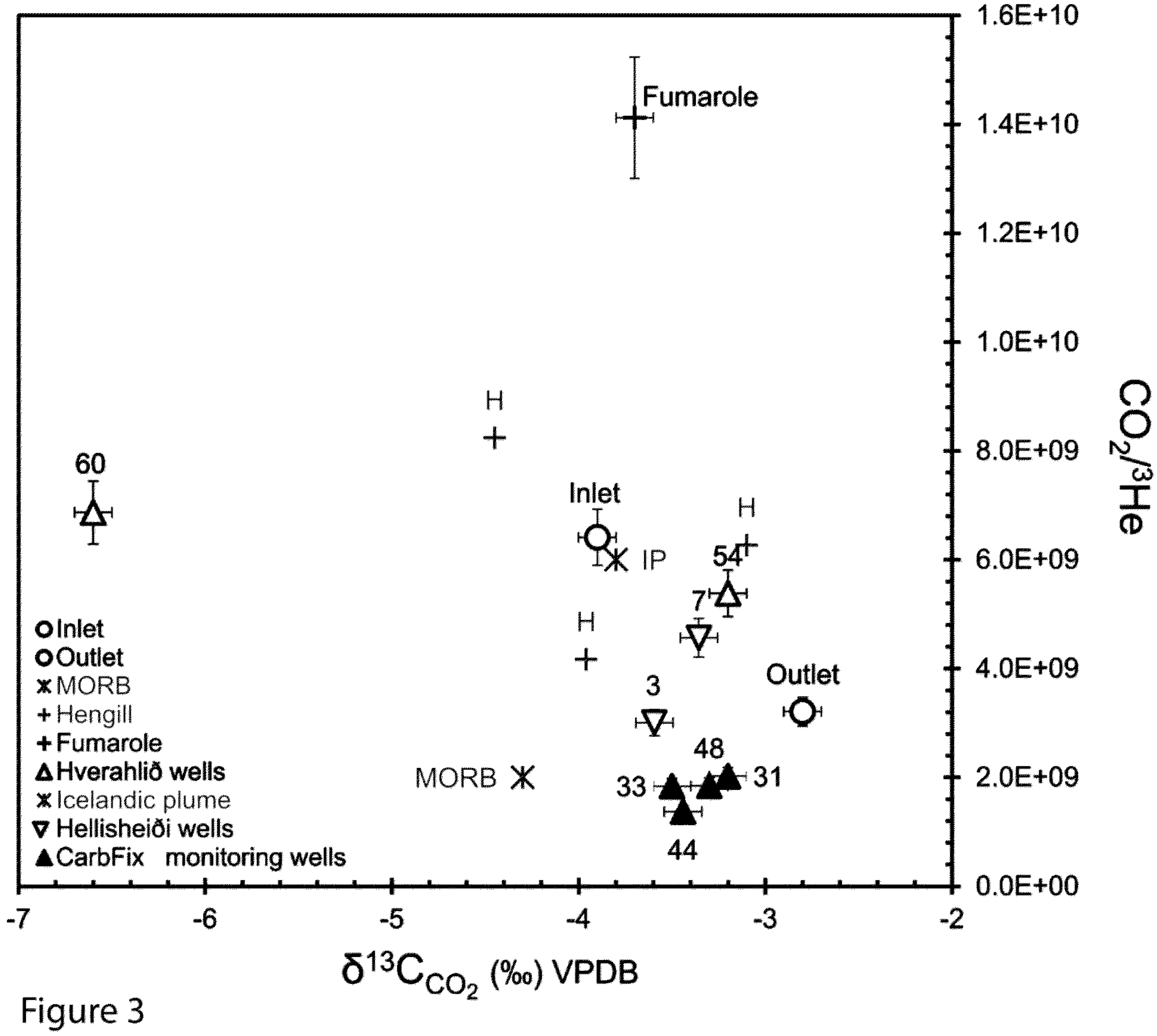
Fumarole
H
60
Inlet
H
IP
54
7
H
3
Outlet
48
MORB
33
31
44
Inlet
Outlet
MORB
Hengill
Fumarole
Hverahlið wells
Icelandic plume
Hellisheiði wells
CarbFix monitoring wells
1.6E+10
1.4E+10
1.2E+10
1.0E+10
8.0E+09
6.0E+09
4.0E+09
2.0E+09
0.0E+00
-7
-6
-5
-4
-3
-2
$CO_2/^3He$
$\delta^{13}C_{CO_2}$ (‰) VPDB

Figure 3

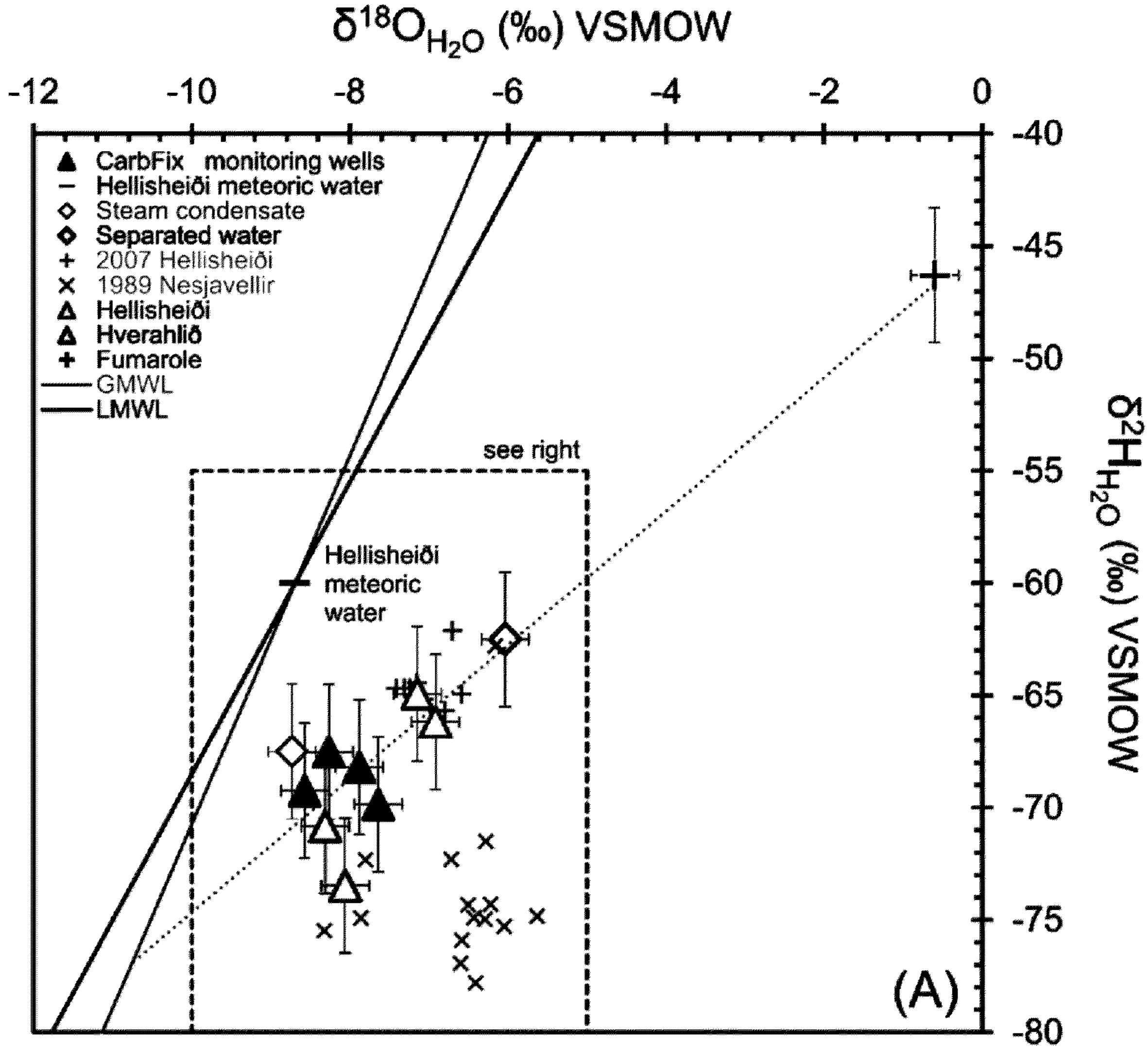
δ18OH2O (‰) VSMOW
-12
-10
-8
-6
-4
-2
0
-40
-45
-50
-55
-60
-65
-70
-75
-80
δ2HH2O (‰) VSMOW
CarbFix monitoring wells
Hellisheiði meteoric water
Steam condensate
Separated water
2007 Hellisheiði
1989 Nesjavellir
Hellisheiði
Hverahlið
Fumarole
GMWL
LMWL
see right
Hellisheiði
meteoric
water
(A)

Figure 4A

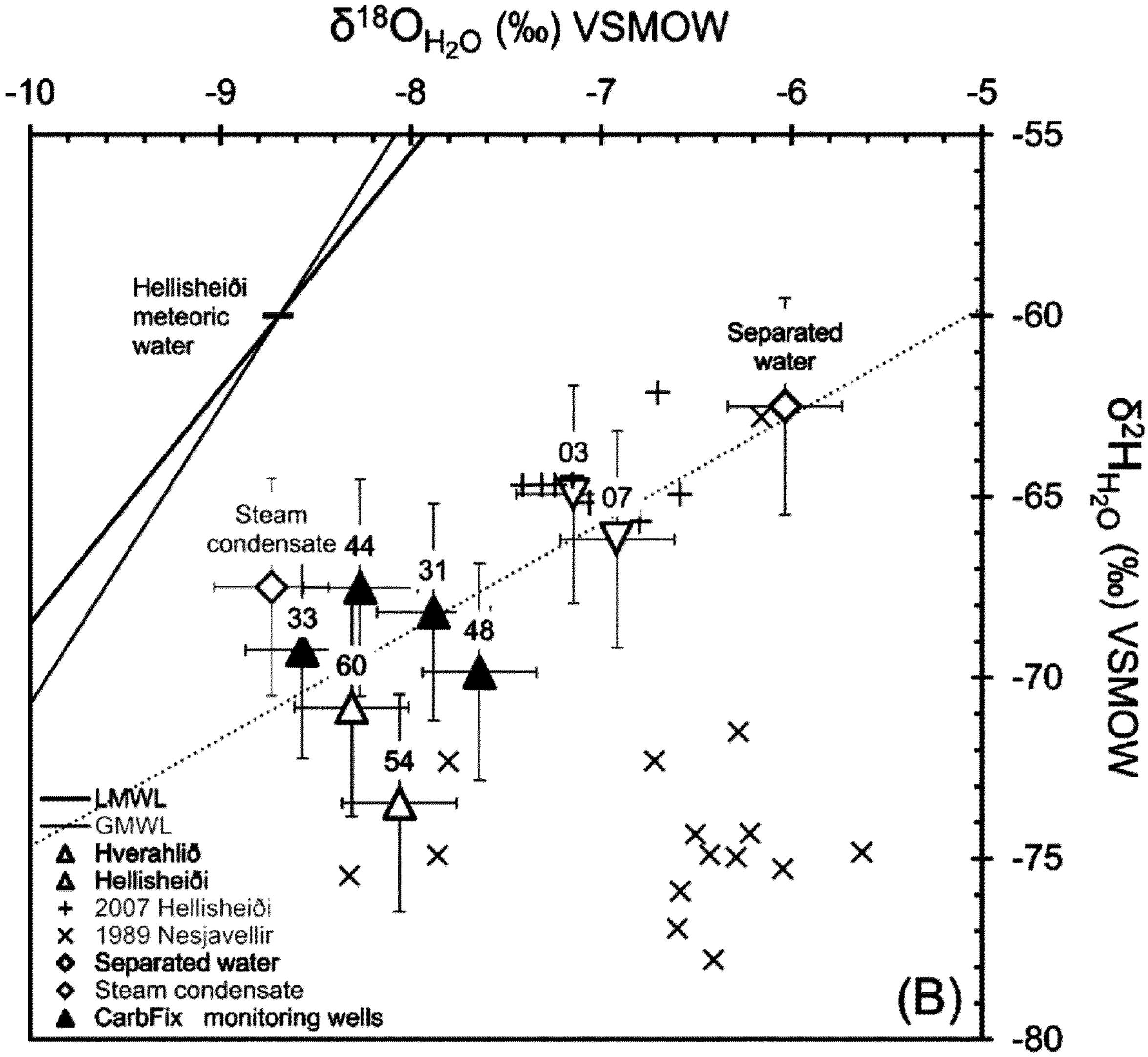
δ18OH2O (‰) VSMOW
-10
-9
-8
-7
-6
-5
-55
-60
-65
-70
-75
-80
δ2HH2O (‰) VSMOW
Hellisheiði
meteoric
water
Separated
water
Steam
condensate
03
07
44
31
33
48
60
54
LMWL
GMWL
Hverahlið
Hellisheiði
2007 Hellisheiði
1989 Nesjavellir
Separated water
Steam condensate
CarbFix monitoring wells
(B)

Figure 4B

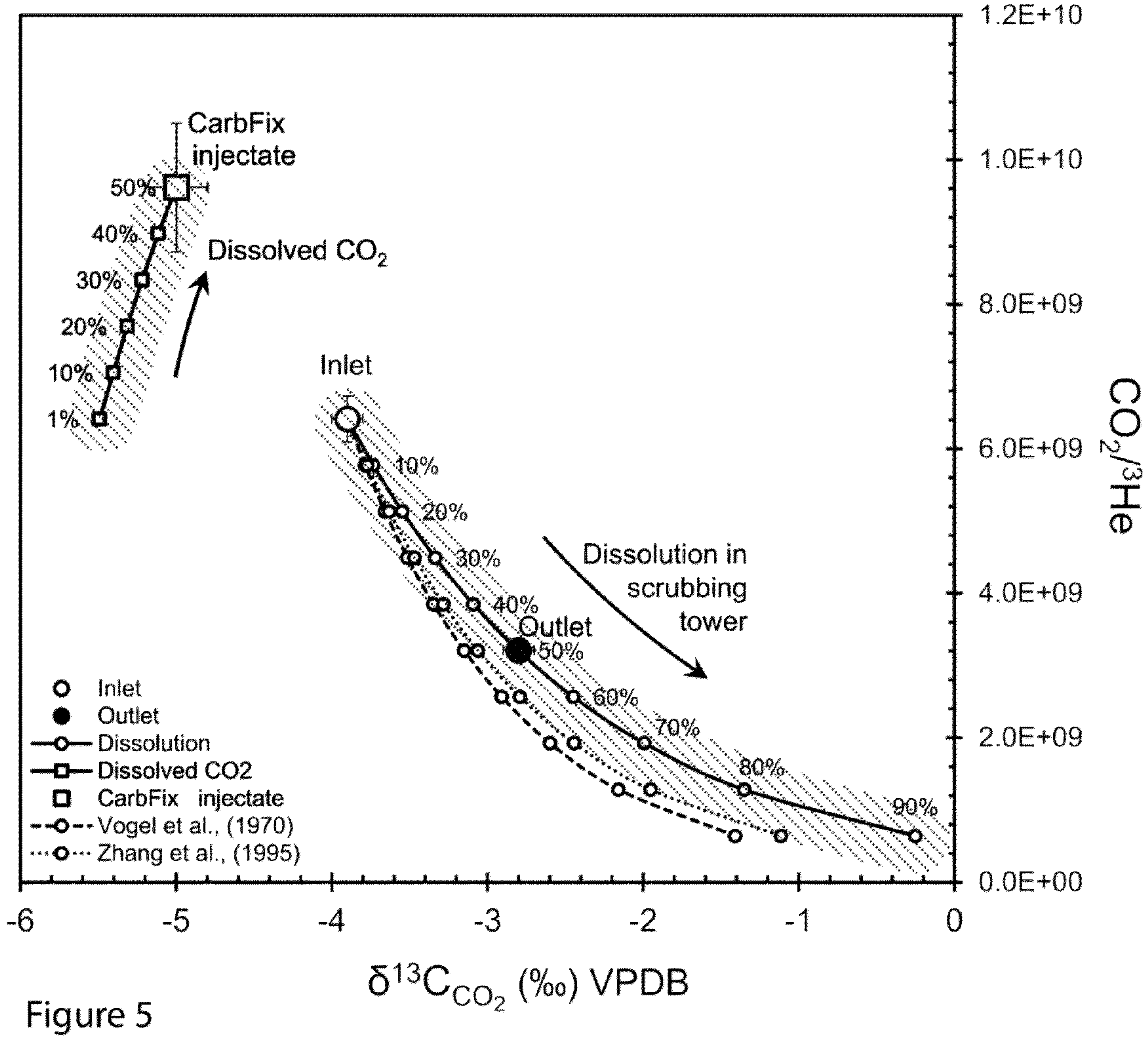
CarbFix
injectate
50%
40%
30%
20%
10%
1%
Dissolved $CO_2$
Inlet
10%
20%
30%
40%
Outlet
50%
60%
70%
80%
90%
Dissolution in
scrubbing
tower
Inlet
Outlet
Dissolution
Dissolved CO2
CarbFix injectate
Vogel et al., (1970)
Zhang et al., (1995)
1.2E+10
1.0E+10
8.0E+09
6.0E+09
4.0E+09
2.0E+09
0.0E+00
$CO_2/^3He$
-6
-5
-4
-3
-2
-1
0
$\delta^{13}C_{CO_2}$ (‰) VPDB

Figure 5

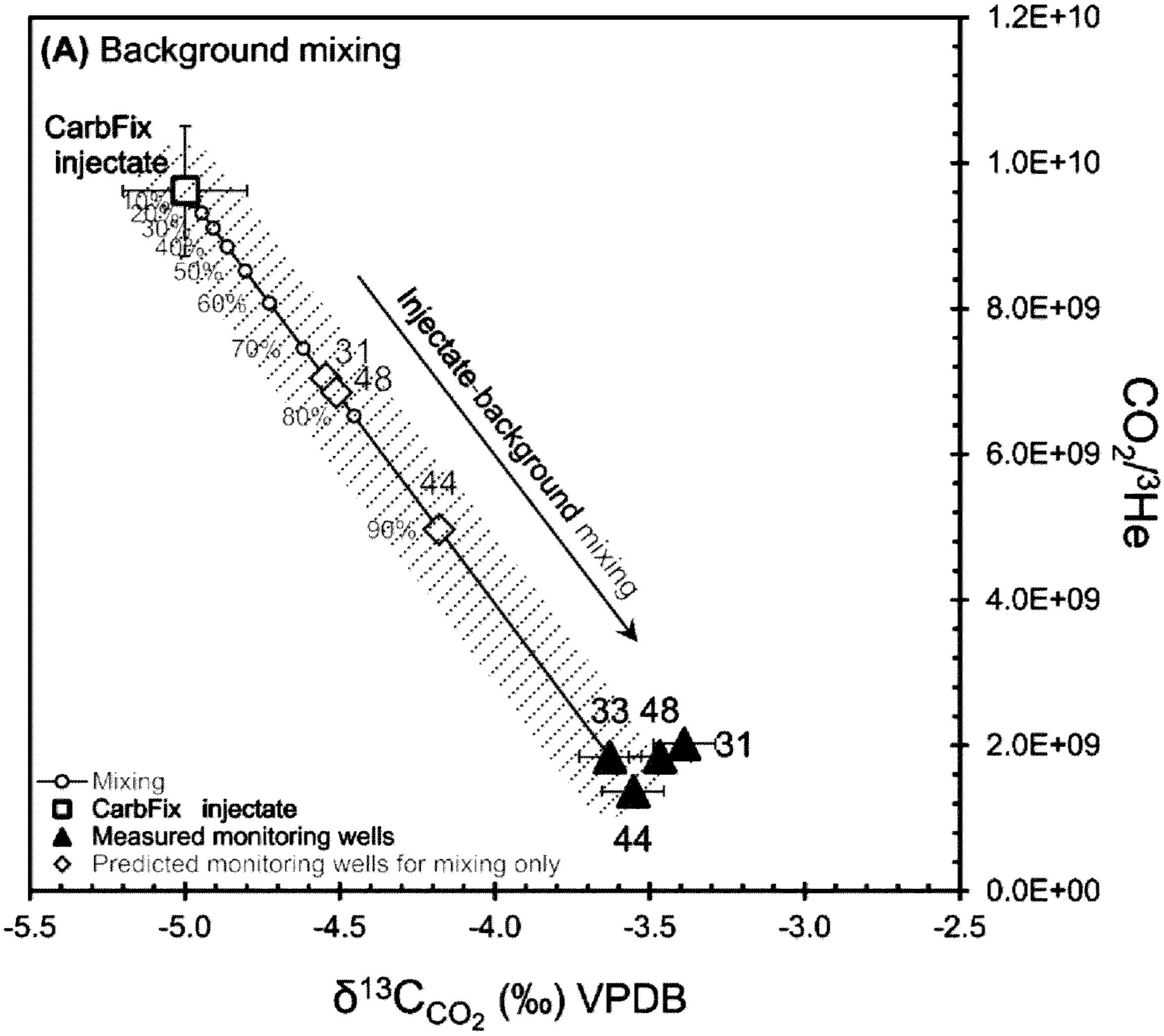
(A) Background mixing
CarbFix injectate
10%
20%
30%
40%
50%
60%
70%
80%
90%
31
48
44
Injectate-background mixing
33
48
31
44
Mixing
CarbFix injectate
Measured monitoring wells
Predicted monitoring wells for mixing only
-5.5
-5.0
-4.5
-4.0
-3.5
-3.0
-2.5
δ13CCO2 (‰) VPDB
1.2E+10
1.0E+10
8.0E+09
6.0E+09
4.0E+09
2.0E+09
0.0E+00
CO2/3He

Figure 6A

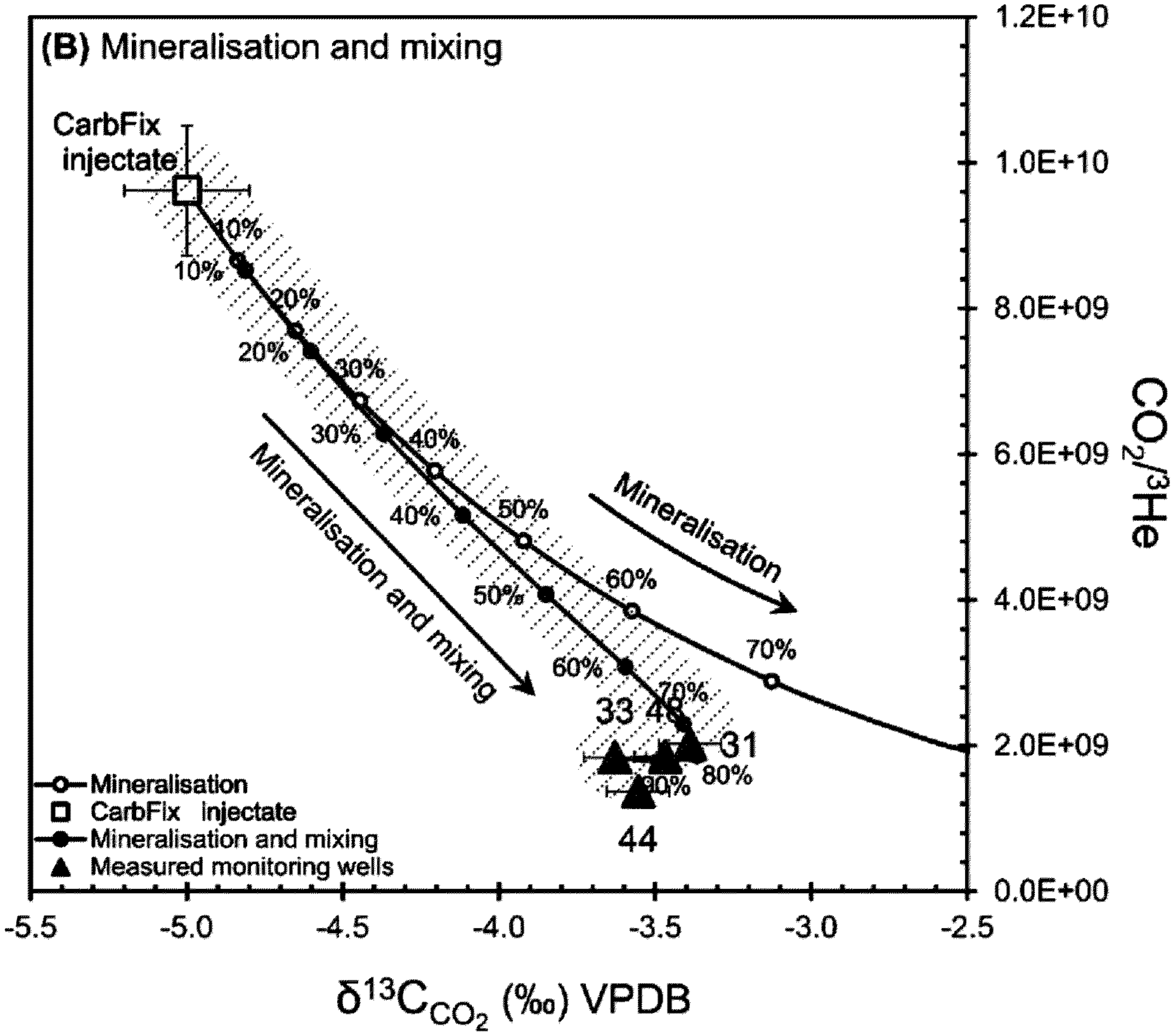
(B) Mineralisation and mixing
CarbFix
injectate
10%
10%
20%
20%
30%
30%
40%
40%
50%
50%
60%
60%
70%
70%
80%
90%
Mineralisation and mixing
Mineralisation
33
48
31
44
Mineralisation
CarbFix Injectate
Mineralisation and mixing
Measured monitoring wells
-5.5
-5.0
-4.5
-4.0
-3.5
-3.0
-2.5
$\delta^{13}C_{CO_2}$ (‰) VPDB
1.2E+10
1.0E+10
8.0E+09
6.0E+09
4.0E+09
2.0E+09
0.0E+00
$CO_2/^3He$

Figure 6B

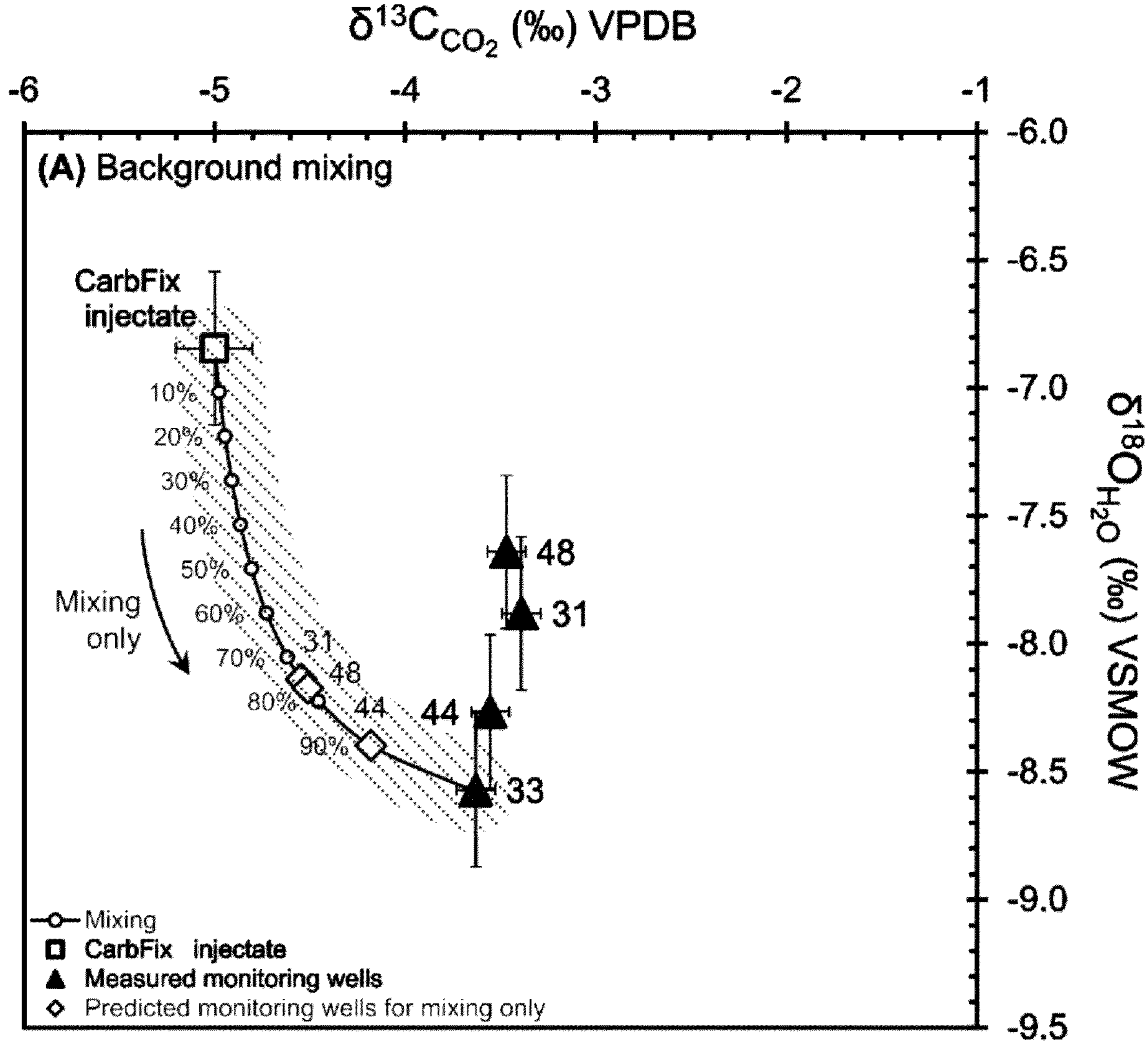

δ13CCO2 (‰) VPDB
-6
-5
-4
-3
-2
-1
(A) Background mixing
CarbFix
injectate
10%
20%
30%
40%
50%
60%
70%
80%
90%
Mixing
only
31
48
44
44
48
31
33
-6.0
-6.5
-7.0
-7.5
-8.0
-8.5
-9.0
-9.5
δ18OH2O (‰) VSMOW
Mixing
CarbFix injectate
Measured monitoring wells
Predicted monitoring wells for mixing only


Figure 7A

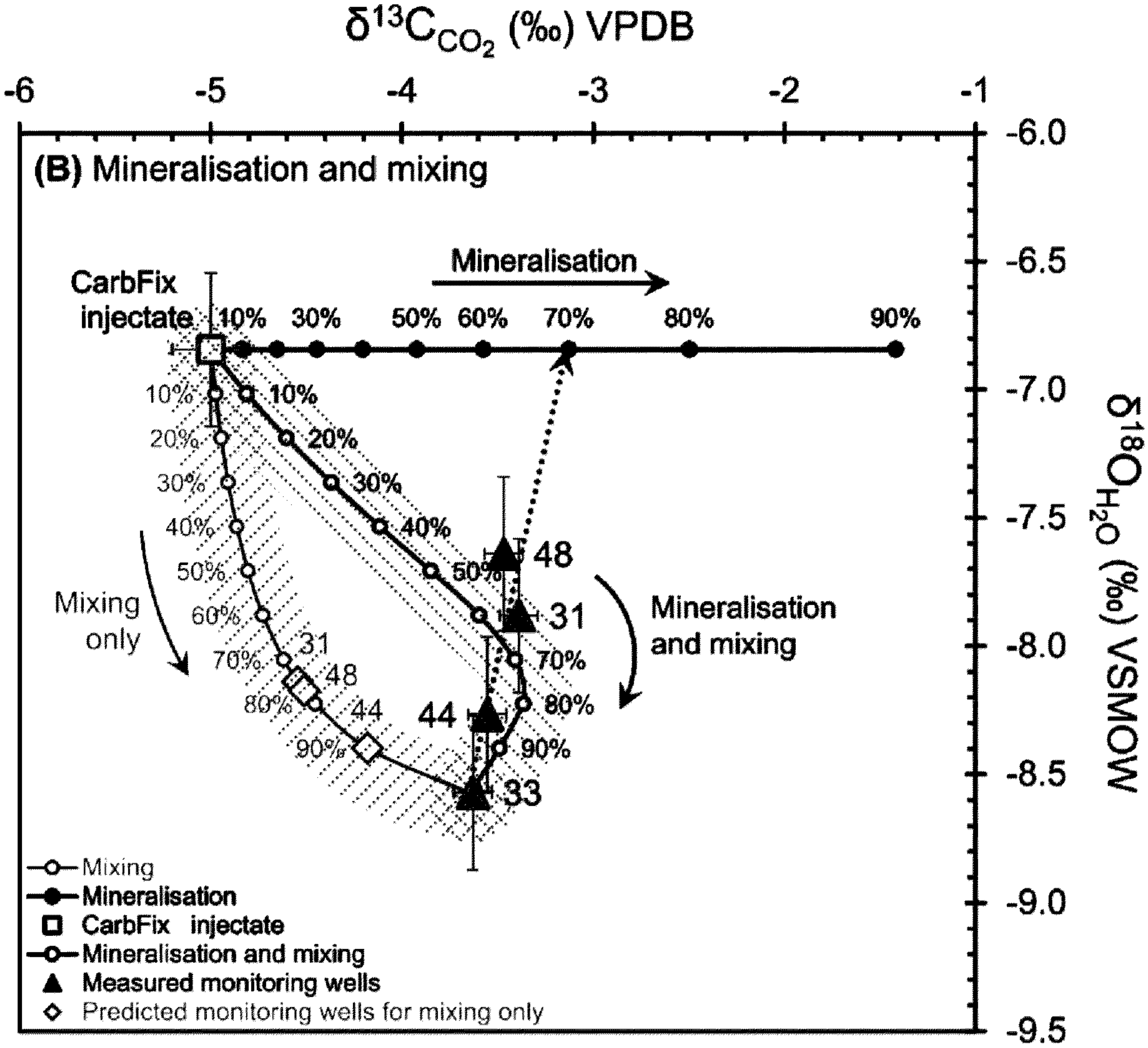
δ13CCO2 (‰) VPDB
-6
-5
-4
-3
-2
-1
-6.0
-6.5
-7.0
-7.5
-8.0
-8.5
-9.0
-9.5
δ18OH2O (‰) VSMOW
(B) Mineralisation and mixing
Mineralisation
CarbFix injectate
10%
30%
50%
60%
70%
80%
90%
Mixing only
Mineralisation and mixing
48
31
44
33
Mixing
Mineralisation
CarbFix injectate
Mineralisation and mixing
Measured monitoring wells
Predicted monitoring wells for mixing only

Figure 7B

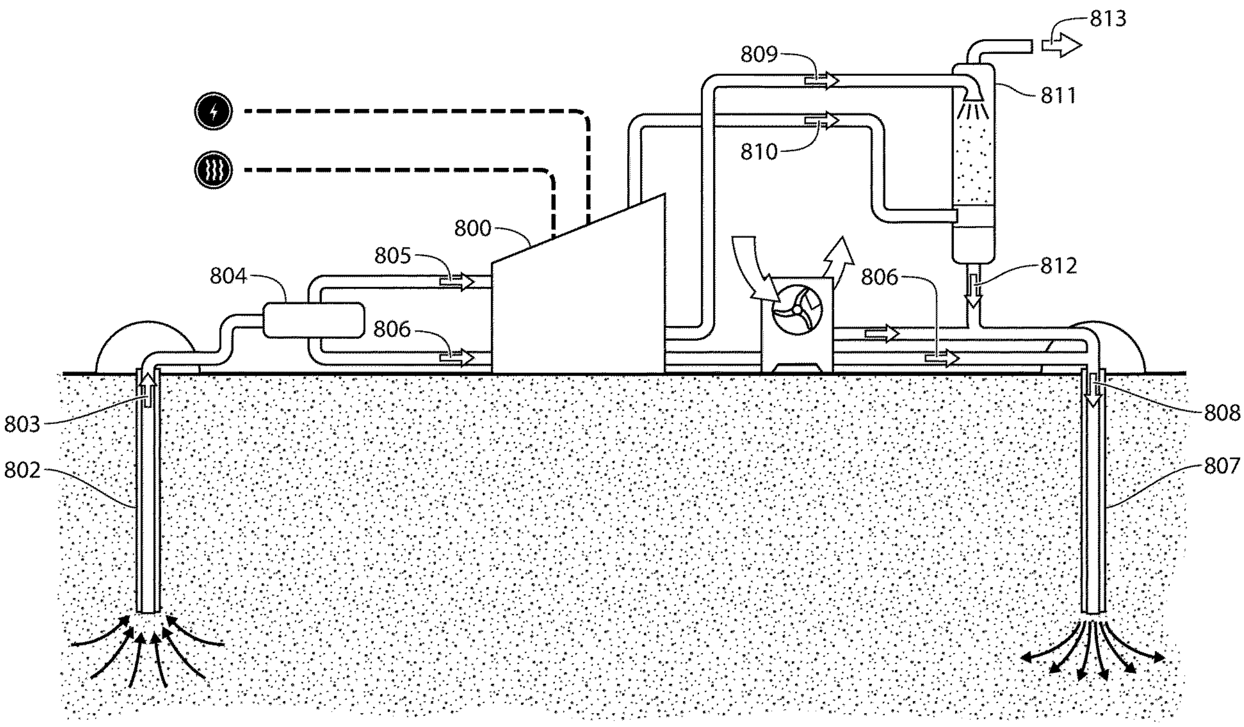


Figure 8

Europäisches Patentamt
European Patent Office
Office européen des brevets

# EUROPEAN SEARCH REPORT

Application Number
EP 24 19 5478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/219112 A1 (SIGFÚSSON BERGUR [IS] ET AL) 14 July 2022 (2022-07-14) * abstract * * figure 10 * * paragraph [0045] - paragraph [0048] * * Example 3; paragraph [0152] - paragraph [0153] * ----- | 1 | INV. E21B43/16 E21B41/00 E21B49/00 |
| A | WO 2024/062130 A1 (RESMAN AS [NO]) 28 March 2024 (2024-03-28) * abstract * * figures 1-4 * * page 20, line 19 - page 22, line 3 * * page 22, line 10 - page 23, line 23 * ----- | 1 | |
| A | HOLDSWORTH C.M. ET AL: "Reconstructing the temperature and origin of CO2 mineralisation in CarbFix calcite using clumped, carbon and oxygen isotopes", APPLIED GEOCHEMISTRY, vol. 162, 1 February 2024 (2024-02-01), page 105925, XP093245664, AMSTERDAM, NL ISSN: 0883-2927, DOI: 10.1016/j.apgeochem.2024.105925 * abstract * * figures 1-2 * * 2. CarbFix project; page 2 * * 2.1. Geological and hydrological setting; page 2 * * 2.2. CO2 injection; page 2 * * 2.3. Monitoring and verification; page 4 * ----- -/-- | 1 | TECHNICAL FIELDS SEARCHED (IPC) E21B |

The present search report has been drawn up for all claims

1

| Place of search | Date of completion of the search | Examiner |
|---|---|---|
| The Hague | 31 January 2025 | Hustedt, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 19 5478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SN BJÖRNSDÓTTIR SANDRA Ó ET AL: "Carbon dioxide storage through mineral carbonation", NATURE REVIEWS EARTH & ENVIRONMENT, [Online] vol. 1, no. 2, 18 October 2021 (2021-10-18), pages 90-102, XP093172576, ISSN: 2662-138X, DOI: 10.1038/s43017-019-0011-8 Retrieved from the Internet: URL:https://hal.science/hal-03384454/file/Oelkers_%20Mineral%20Storage%20of%20Carbon%20Dioxide_AAM-2.pdf> [retrieved on 2025-01-31] * abstract * * the whole document * ----- | 1 | |
| A | MATTER JUERG M. ET AL: "Monitoring permanent CO2 storage by in situ mineral carbonation using a reactive tracer technique", ENERGY PROCEDIA, vol. 63, 1 January 2014 (2014-01-01), pages 4180-4185, XP093245669, NL ISSN: 1876-6102, DOI: 10.1016/j.egypro.2014.11.450 * abstract * * the whole document * ----- | 1 | TECHNICAL FIELDS SEARCHED (IPC) |

-/--

The present search report has been drawn up for all claims

1

| Place of search | Date of completion of the search | Examiner |
|---|---|---|
| The Hague | 31 January 2025 | Hustedt, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 19 5478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HOLDSWORTH CHRIS ET AL: "Tracking CO 2 injection, migration and fate at Carbfix2 using stable isotopes", 16TH INTERNATIONAL CONFERENCE ON GREENHOUSE GAS CONTROL TECHNOLOGIES, GHGT-16, 23 October 2022 (2022-10-23), XP093245672, * abstract * * 4. Discussion; page 6; figure 1 * ----- | 1 | |
| | | | TECHNICAL FIELDS SEARCHED (IPC) |

The present search report has been drawn up for all claims

1

| Place of search | Date of completion of the search | Examiner |
|---|---|---|
| The Hague | 31 January 2025 | Hustedt, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 19 5478

This annex lists the patent family members relating to the patent documents cited in the above-mentioned European search report. The members are as contained in the European Patent Office EDP file on
The European Patent Office is in no way liable for these particulars which are merely given for the purpose of information.

31-01-2025

| Patent document cited in search report | Publication date | Patent family member(s) | Publication date |
|---|---|---|---|
| US 2022219112 A1 | 14-07-2022 | AU 2020280921 A1 | 02-12-2021 |
| | | CA 3137222 A1 | 26-11-2020 |
| | | CL 2021003060 A1 | 23-09-2022 |
| | | CN 113874098 A | 31-12-2021 |
| | | CN 119258747 A | 07-01-2025 |
| | | EP 3972721 A1 | 30-03-2022 |
| | | JP 2022543957 A | 17-10-2022 |
| | | JP 2023165825 A | 17-11-2023 |
| | | KR 20220026532 A | 04-03-2022 |
| | | KR 20240152974 A | 22-10-2024 |
| | | NZ 782088 A | 24-02-2023 |
| | | US 2022219112 A1 | 14-07-2022 |
| | | US 2024375041 A1 | 14-11-2024 |
| | | WO 2020234464 A1 | 26-11-2020 |
| | | ZA 202109178 B | 29-06-2022 |
| WO 2024062130 A1 | 28-03-2024 | GB 2624102 A | 08-05-2024 |
| | | WO 2024062130 A1 | 28-03-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 4031267 A1